# EUROPEAN PATENT SPECIFICATION

(11) **EP 4 175 316 B1**
(45) Date of publication and mention of the grant of the patent: **28.01.2026**
(21) Application number: 21846749.6
(22) Date of filing: 22.07.2021
(51) Int. Cl.: H04R 1/10, H04R 5/033, H04R 3/00, H04B 1/3827, H04R 5/04

(54) **HEADPHONE CALL METHOD AND HEADPHONES**
KOPFHÖRER-ANRUFVERFAHREN UND KOPFHÖRER
PROCÉDÉ D'APPEL PAR CASQUE D'ÉCOUTE ET CASQUE D'ÉCOUTE

(30) Priority: 24.07.2020 CN 202010734846
(43) Date of publication of application: 03.05.2023
(73) Proprietor: Huawei Technologies Co., Ltd., Longgang District, Shenzhen, Guangdong 518129 (CN)
(72) Inventor: MENG, Fanxing, Shenzhen, Guangdong 518129 (CN); ZHONG, Jinyun, Shenzhen, Guangdong 518129 (CN)
(74) Representative: Pfenning, Meinig & Partner mbB
(86) International application number: PCT/CN2021/107885
(87) International publication number: WO 2022/017469

(56) References cited:
- WO-A1-2020/118641
- CN-A- 107 426 643
- CN-A- 108 055 605
- CN-A- 109 151 212
- CN-A- 109 151 212
- US-A1- 2009 154 720
- US-A1- 2015 245 129
- US-A1- 2018 114 518

## Description

### TECHNICAL FIELD

This application relates to the field of terminal technologies, and in particular, to a headset call method, a headset, a computer-readable storage medium and a computer program product.

### BACKGROUND

A headset is an accessory of a terminal device such as a smart watch, a mobile phone, or a computer. A microphone is usually disposed on the headset, and is configured to collect audio, to assist the terminal device in having a call or the like. However, when receiving a user voice, the microphone on the headset is easily affected by an environment (for example, a noisy environment or an environment in which a sound source volume is low) in which the microphone is located. As a result, a signal-to-noise ratio of a received voice signal is low, and a voice effect of the headset in a call process is affected.

CN 108055605 A discloses a neck-line Bluetooth earphone and an application method thereof. The neck-line bluetooth earphone comprises two earphone shells and an earphone wire used for being connected with the two earphone shells. A microphone array is arranged on one of the earphone shells. The neck-line Bluetooth earphone further comprises a noise detection sensor arranged on the two earphone shells or the earphone wire. The noise detection sensor is used for detecting the noise of the environment where the neck-line Bluetooth earphone is located. A metal tube is arranged on the earphone wire in a sleeved mode, and the metal tube is used for fixing the shape of the earphone wire.

CN 109151212 A disclose a device control method. The method comprises: when an electronic device is in a call state, detecting an output mode of a downlink voice of the call; if the output mode is an earphone output mode, detecting a wearing state of a first earphone and a second earphone which output the downlink voice; if it is detected that there is an unworn earphone in the first earphone and the second earphone, disconnecting the connection with the unworn earphone.

### SUMMARY

The invention is set out in the appended set of claims. Technical solutions of this application provide a headset call method, a headset, a readable storage medium, and a program product, to resolve a problem of a poor voice effect of the headset in a call process to some extent.

According to a first aspect, a technical solution of this application provides a headset call method, applied to a headset, where the headset includes a left earbud and a right earbud, and the method includes: in a call state, determining a microphone on a first earbud as a talking microphone if detecting that the first earbud is in a non-wearing state; and sending a first voice signal received by the talking microphone to a terminal device, where the first earbud is one of the left earbud and the right earbud.

Based on the method provided in this technical solution of this application, when the headset is in the call state, a microphone on an earbud that is in a non-wearing state may be switched to be the talking microphone. In this way, a position of the talking microphone is no longer limited to a wearing position of the earbud or a wearing position of a control module. In an environment with loud ambient noise or a low sound source volume, when a user needs to use the headset to have a call, the user may move one of the earbuds to a position close to a sound source (for example, a position near a lip of the user). In this way, the headset may detect that the earbud at the position close to the sound source is in a non-wearing state, and use a microphone on the earbud as the talking microphone. Because the talking microphone is closer to the sound source, intensity of a user voice received by the talking microphone can be increased to an extent, to improve a signal-to-noise ratio of the voice signal received by the talking microphone. Further, a voice effect of the headset in a call process is enhanced.

In the technical solution of this application, the first earbud may be understood as an earbud whose built-in microphone may be used as the talking microphone in a non-wearing state. Both the left earbud and the right earbud may be set as the first earbud. In this way, when using the headset to have a call, the user may randomly take off either earbud, and use a microphone on the earbud as the talking microphone. Alternatively, one of the left earbud and the right earbud may be set as the first earbud. It is assumed that the left earbud is set as the first earbud. In this case, when using the headset to have a call, the user may take off the left earbud and use a microphone on the left earbud as the talking microphone.

The first voice signal may be voice information, of the user, that is received by the microphone on the first earbud after the microphone on the first earbud is determined as the talking microphone.

In an implementation, the method further includes: turning off a speaker on the first earbud when determining the microphone on the first earbud as the talking microphone.

Based on this implementation, when the user has a call by using the headset, the first voice signal of the user may be received by using the talking microphone on the first earbud that is in the non-wearing state, and a voice signal of another party in the call is played by using a speaker on the other earbud.

The determining a microphone on a first earbud as a talking microphone if detecting that the first earbud is in a non-wearing state includes: determining the microphone on the first earbud as the talking microphone if detecting that the first earbud is in the non-wearing state and a signal-to-noise ratio of a voice signal received by the microphone on the first earbud is greater than a signal-to-noise ratio of a voice signal received by a current talking microphone on the headset.

Based on this implementation, whether the first earbud of the user is closer to the sound source than the current talking microphone is determined through signal-to-noise ratio detection, to determine whether the user uses the microphone on the first earbud as the talking microphone, so as to avoid incorrect switching.

In an implementation, a wearing sensor is disposed on the first earbud, and the method further includes: determining whether the first earbud is in the non-wearing state based on detection information of the wearing sensor.

In an implementation, a switch is disposed on the first earbud, and when it is detected that the switch is on, it is determined that the first earbud is in the non-wearing state.

In an implementation, the microphone on the first earbud includes a front-facing microphone and a rear-facing microphone, and when it is detected that an absolute value of a difference between a signal-to-noise ratio of a voice signal received by the front-facing microphone and a signal-to-noise ratio of a voice signal received by the rear-facing microphone is less than a preset difference, it is determined that the first earbud is in the non-wearing state.

In an implementation, the microphone on the first earbud includes a first microphone and a second microphone, and when it is detected that the first microphone is blocked, it is determined that the first earbud is in the non-wearing state. The determining a microphone on a first earbud as a talking microphone includes: determining the second microphone as the talking microphone.

In an implementation, if a plurality of microphones are disposed on the first earbud, the determining a microphone on a first earbud as a talking microphone includes: determining a microphone with a maximum signal-to-noise ratio in the plurality of microphones as the talking microphone.

In an implementation, if a plurality of microphones are disposed on the first earbud, the determining a microphone on a first earbud as a talking microphone includes: determining at least two microphones of the plurality of microphones as talking microphones; and the sending a first voice signal received by the talking microphone to a terminal device includes: synthesizing voice signals separately received by the at least two talking microphones to obtain the first voice signal, and sending the first voice signal to the terminal device.

In an implementation, before the sending a first voice signal received by the talking microphone to a terminal device, the method further includes: performing, by using a voice signal received by at least one microphone other than the talking microphone on the headset, noise cancellation on the first voice signal received by the talking microphone; and the sending a first voice signal received by the talking microphone to a terminal device includes: sending the first voice signal after noise cancellation to the terminal device.

Based on this implementation, further noise cancellation is performed on the first voice signal received by the talking microphone, to further increase the signal-to-noise ratio of the first voice signal, and further enhance the voice effect of the headset in the call process.

According to a second aspect, a technical solution of this application provides a headset. The headset includes a left earbud and a right earbud, and the headset includes a processor, a memory, and a computer program that is stored in the memory and that can run on the processor. When the processor executes the computer program, the headset executes the headset call method according to any implementation of the first aspect. A first earbud is one of the left earbud and the right earbud.

In an implementation, the headset is a true wireless stereo headset or a neckband headset.

In an implementation, the first earbud is a primary earbud.

According to a third aspect, a technical solution of this application provides a computer-readable storage medium. The computer-readable storage medium stores a computer program, and when the computer program is executed by a headset, the headset call method according to any implementation of the first aspect is implemented.

According to a fourth aspect, a technical solution of this application provides a computer program product. When the computer program product runs on a headset, the headset is enabled to implement the headset call method according to any implementation of the first aspect.

For technical effects of the second aspect to the sixth aspect provided in technical solutions of this application, refer to the technical effects of the first aspect or the implementations of the first aspect. Details are not described herein again.

### BRIEF DESCRIPTION OF DRAWINGS

FIG. 1 is a schematic diagram of microphones on a TWS headset according to an embodiment of this application;
FIG. 2 is a schematic diagram of a microphone on a neckband headset according to an embodiment of this application;
FIG. 3 is a schematic flowchart 1 of a headset call method according to an embodiment of this application;
FIG. 4 is a schematic diagram 1 of an application scenario of a TWS headset according to an embodiment of this application;
FIG. 5 is a schematic diagram 1 of an application scenario of a neckband headset according to an embodiment of this application;
FIG. 6 is a schematic diagram 2 of an application scenario of a TWS headset according to an embodiment of this application;
FIG. 7 is a schematic diagram 2 of an application scenario of a neckband headset according to an embodiment of this application;
FIG. 8 is a schematic diagram 3 of an application scenario of a neckband headset according to an embodiment of this application;
FIG. 9 is a schematic diagram 3 of an application scenario of a TWS headset according to an embodiment of this application;
FIG. 10 is a schematic flowchart 1 of talking microphone switching according to an embodiment of this application;
FIG. 11 is a schematic diagram of an application scenario in which a plurality of microphones are disposed on a headset according to an embodiment of this application;
FIG. 12 is a schematic diagram 1 of a frequency response curve of a microphone according to an embodiment of this application;
FIG. 13 is a schematic flowchart 2 of talking microphone switching according to an embodiment of this application;
FIG. 14 is a schematic diagram of a structure of an ANC headset according to an embodiment of this application;
FIG. 15 is a schematic diagram 2 of a frequency response curve of a microphone according to an embodiment of this application;
FIG. 16 is a schematic diagram of a structure of a neckband ANC headset according to an embodiment of this application;
FIG. 17 is a schematic flowchart 3 of talking microphone switching according to an embodiment of this application;
FIG. 18 is a schematic diagram of a noise source according to an embodiment of this application;
FIG. 19 is a schematic diagram 1 of a prompt interface for having a call by using a headset according to an embodiment of this application;
FIG. 20 is a schematic diagram 2 of a prompt interface for having a call by using a headset according to an embodiment of this application;
FIG. 21 is a schematic diagram 3 of a prompt interface for having a call by using a headset according to an embodiment of this application;
FIG. 22 is a schematic diagram 4 of a prompt interface for having a call by using a headset according to an embodiment of this application;
FIG. 23 is a schematic diagram 5 of a prompt interface for having a call by using a headset according to an embodiment of this application;
FIG. 24 is a schematic diagram 6 of a prompt interface for having a call by using a headset according to an embodiment of this application;
FIG. 25 is a schematic diagram of a structure of a headset call apparatus according to an embodiment of this application; and
FIG. 26 is a schematic diagram of a hardware structure of a headset according to an embodiment of this application.

### DESCRIPTION OF EMBODIMENTS

Currently, when a headset assists a terminal device in having a call, a talking microphone (which may also be referred to as a calling microphone) is usually located at a fixed position. The talking microphone refers to a microphone configured to receive a voice signal of a user when the headset is in a call state. The voice signal may be sent by the terminal device to another party that is having the call with the terminal device. The call state means that the headset enables, based on a call instruction sent by the terminal device, the talking microphone to receive the voice signal of the user. The headset may send the voice signal of the user to the terminal device, so that the terminal device sends the voice signal of the user to the another party. In addition, the headset may receive a voice signal of the another party through the terminal device, and play the voice signal of the another party through a speaker.

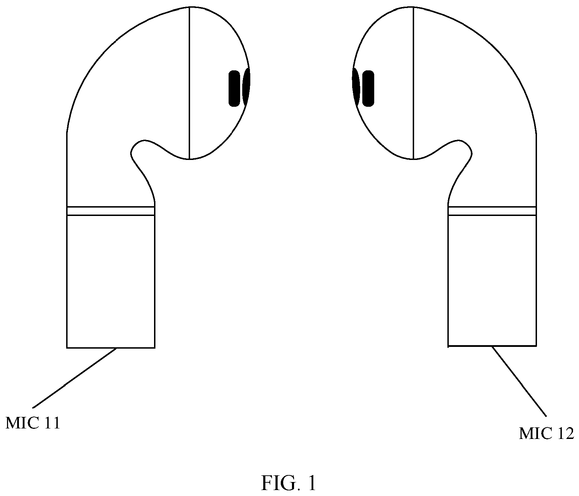

For example, for a true wireless stereo (True Wireless Stereo, TWS) headset, a microphone on a primary earbud is usually used as a talking microphone when the headset is in a call state. For example, a TWS headset shown in FIG. 1 includes a left earbud and a right earbud. At least one microphone is disposed on each of the two earbuds. In FIG. 1, for example, the two earbuds each are provided with one microphone (namely, an MIC 11 and an MIC 12 in FIG. 1). Although not shown in the figure, the TWS headset may further include a charging case.

One earbud of the TWS headsets is used as a primary earbud and is communicatively connected to the terminal device (for example, a mobile phone, a computer, or a smart watch). The other earbud is used as a secondary earbud and is communicatively connected to the primary earbud. The communication connection may include a Bluetooth connection, a Wi-Fi connection, a near-field radio frequency communication connection, and the like. For example, when the user has a call with another party (for example, the user may call the another party, or the another party may call the user), the primary earbud controls, based on a call instruction sent by the terminal device, a talking microphone on the primary earbud to receive a voice signal of the user, and sends the voice signal of the user to the terminal device. Then, the terminal device sends the voice signal of the user to the another party. In addition, the primary earbud receives a voice signal of the another party through the terminal device, and sends the voice signal of the another party to the secondary earbud, and speakers on the primary earbud and the secondary earbud play the voice signal of the another party. In this way, the call between the user and the another party is implemented.

An earbud that is of the TWS headset and that is first worn by the user is used as the primary earbud, and an earbud later worn by the user is used as the secondary earbud. For example, if it is detected that the right earbud is worn on an ear of the user earlier than the left earbud, the right earbud may be used as the primary earbud, and the left earbud may be used as the secondary earbud. During a call, the microphone MIC 11 on the right earbud is used as the talking microphone to receive the voice signal. When both the left earbud and the right earbud are in a wearing state, if the user takes off one earbud, the other earbud that is still in the wearing state may be the primary earbud. For example, the user first takes off the right earbud, but the left earbud is still in the wearing state. In this case, the left earbud may be used as the primary earbud. Correspondingly, during the call, the talking microphone may be the MIC 12 on the left earbud.

In an embodiment, both the left earbud and the right earbud of the TWS headset may be communicatively connected to the terminal device (for example, a mobile phone, a computer, or a smart watch). In this case, there may be no need to distinguish between the primary earbud and the secondary earbud. The left earbud and the right earbud may be communicatively connected, and the left earbud and the right earbud are separately communicatively connected to the terminal device. The communication connection may include a Bluetooth connection, a Wi-Fi connection, a near-field radio frequency communication connection, and/or the like. For example, during a call, the left earbud and the right earbud separately receive a voice signal of another party in the call through the terminal device. The left earbud and the right earbud may play the voice signal of the another party through built-in speakers. The microphone of the left earbud or the microphone of the right earbud may be used as the talking microphone to receive a voice signal of the user, and send the voice signal of the user to the another party through the terminal device. In this way, the call between the user and the another party is implemented.

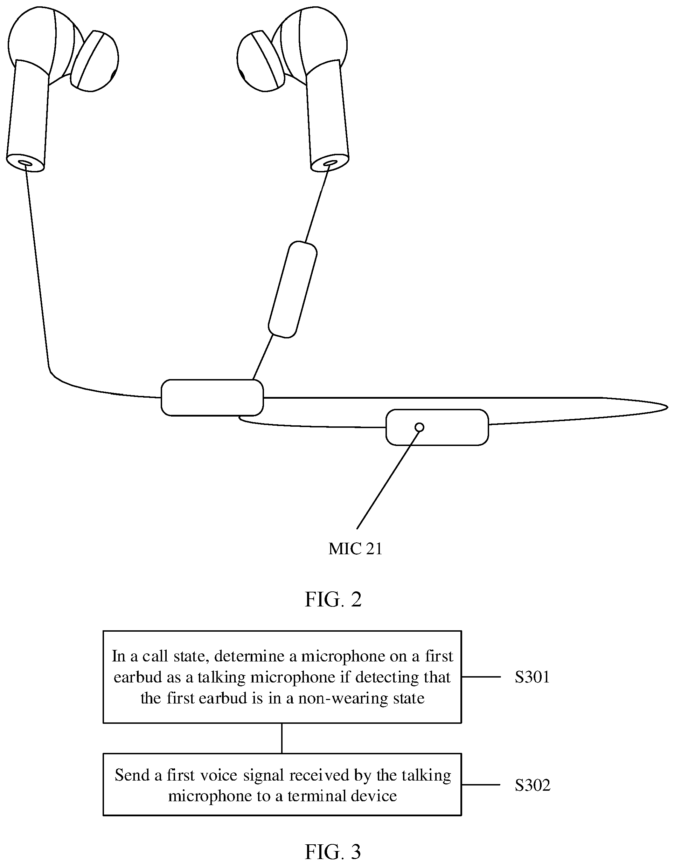

For another example, for a neckband headset, a talking microphone may be disposed on a control module of a neckband. For example, a neckband headset shown in FIG. 2 includes a neckband and two earbuds, namely, a left earbud and a right earbud. The control module is disposed on the neckband, and a microphone MIC 21, a communications module (for example, a Bluetooth circuit or a near-field radio frequency circuit), and a play control button (for example, a power button, a "+" button, and a "-" button) are disposed in the control module. When the neckband headset assists the terminal device in having a call, the control module controls, based on a call instruction sent by the terminal device, the talking microphone MIC 21 to receive a voice signal of the user, and sends the voice signal of the user to another party in the call through the terminal device. In addition, when receiving a voice signal of the another party through the terminal device, the control module sends the voice signal of the another party to the left and right earbuds through a connection line in the neckband, so that speakers on the left and right earbuds synchronously play the voice signal of the another party.

When the headset is used to have a call in some noisy environments (for example, on a noisy street, on a fast-running motorcycle, or in a vehicle with music on or with a window open), because the talking microphone is located at the fixed position (for example, located at a position on an ear or a neck of the user), and is at a specific distance from a sound source (for example, a lip of the user), when the talking microphone receives a user voice, sound intensity of a received ambient noise may be greater than sound intensity of the user voice. Therefore, a signal-to-noise ratio of a received voice signal is small, and a voice effect of the headset is further affected.

Alternatively, in some environments in which a sound source volume is low, the talking microphone may fail to effectively collect the user voice. For example, when the user is in a conference place or a public rest place, the user needs to lower a speaking volume. In this case, because the talking microphone is at a specific distance from the sound source, the talking microphone may fail to effectively collect the user voice, thereby furthering affecting the voice effect of the headset.

Therefore, embodiments of this application provide a headset call method. When the headset is in a call state, a microphone on an earbud that is in a non-wearing state may be switched to be a talking microphone. In this way, a position of the talking microphone is no longer limited to a wearing position of the earbud or a wearing position of a control module. In an environment with loud ambient noise or a low sound source volume, when a user needs to use the headset to have a call, the user may move one of the earbuds to a position close to a sound source (for example, a position near a lip of the user). In this way, the headset may detect that the earbud at the position close to the sound source is in a non-wearing state, and use a microphone on the earbud as the talking microphone. Because the talking microphone is closer to the sound source, intensity of a user voice received by the talking microphone can be increased to an extent, to improve a signal-to-noise ratio of a voice signal received by the talking microphone, and further enhance a voice effect of the headset in the call process.

It should be noted that the headset call method provided in embodiments of this application is also applicable to a headset with a plurality of microphones, and the microphone is disposed on at least one earbud of the headset. The headset to which embodiments of this application is applicable may be a headset of any form, such as a TWS headset, a neckband headset, or a wire control headset. This is not limited in this application.

In addition, in the descriptions of embodiments of this application, ordinal numbers such as "first" and "second" are mentioned are only used for distinguishing, unless the ordinal numbers definitely represent a sequence based on the context. A term such as "example" or "for example" is used to represent giving an example, an illustration, or a description. Any embodiment or design scheme described as "example" or "for example" in embodiments of this application should not be explained as being more preferred or having more advantages than another embodiment or design scheme. Exactly, use of the term such as "example" or "for example" is intended to present a related concept in a specific manner.

Unless otherwise stated, in this specification, "/" usually indicates an "or" relationship between the associated objects. For example, A/B may represent A or B. The term "and/or" in this specification describes only an association relationship for associated objects and represents that three relationships may exist. For example, A and/or B may represent the following three cases: Only A exists, both A and B exist, and only B exists. In addition, in the descriptions of this application, "a plurality of" means two or more.

The following describes various possible implementations of the microphone switching method provided in this application by using examples with reference to specific embodiments.

FIG. 3 is a flowchart of an embodiment of a headset call method according to this application. The method includes the following steps.

S301: In a call state, determine a microphone on a first earbud as a talking microphone if detecting that the first earbud is in a non-wearing state.

S302: Send a first voice signal received by the talking microphone to a terminal device.

The first earbud may be understood as an earbud whose built-in microphone may be used as the talking microphone in a non-wearing state. In an embodiment, both a left earbud and a right earbud of a headset may be first earbuds. In this case, when a user has a call by using the headset, the user may move either of the left earbud and the right earbud to a position closer to a sound source (for example, a position near a lip of the user), and a microphone on the first earbud that is moved to the position closer to the sound source is switched to be the talking microphone.

In another example, one of the left earbud and the right earbud may be the first earbud. For example, the first earbud is the left earbud. A microphone is disposed on the left earbud, and a microphone may be disposed on the right earbud, or no microphone is disposed on the right earbud. When the user has a call by using the headset, each time the user needs to move the talking microphone close to the sound source, the user may take off the left earbud and move the left earbud to a position closer to the sound source, so that the headset switches the microphone on the left earbud thereof to the talking microphone.

The first voice signal may refer to a voice signal of the user received by the talking microphone after the microphone on the first earbud is determined as the talking microphone.

The headset may enter a call state based on a call instruction sent by the terminal device. For example, when the terminal device starts a call and detects that there is a headset that establishes a connection to the terminal device, the terminal device may send the call instruction to the headset to instruct the headset to enter a call state. In the call state, the headset may enable the microphone to receive the first voice signal of the user, and send the first voice signal of the user to the terminal device connected to the headset, and then the terminal device sends the first voice signal of the user to another party in the call. In addition, the headset may receive and play a voice signal that is of the another party and that is sent by the terminal device, to assist the terminal device in having the call with the another party.

In this embodiment of this application, the headset may perform state detection on the first earbud after entering the call state. A state of the first earbud may include a wearing state and a non-wearing state. The wearing state may be understood as a state in which the first earbud is worn on an ear of the user. Correspondingly, the non-wearing state may be understood as a state in which the first earbud is not worn on the ear of the user.

If it is detected that the first earbud is in the non-wearing state, the microphone on the first earbud is determined as the talking microphone. One microphone or a plurality of microphones may be disposed on the first earbud. When a plurality of microphones are disposed on the first earbud, any one of the microphones may be determined as the talking microphone. Certainly, at least two microphones in the plurality of microphones may alternatively be talking microphones.

In an implementation, signal-to-noise ratios of voice signals separately received by the plurality of microphones may also be detected, and then a microphone with a maximum signal-to-noise ratio of a received voice signal is determined as the talking microphone. In an implementation, the plurality of microphones may be further determined as talking microphones. Correspondingly, if a plurality of talking microphones are determined, the headset may synthesize voice signals received by the plurality of talking microphones, and then send the first voice signal obtained through synthesis to the terminal device.

For example, a voice signal received by each talking microphone may include two signals of different frequency bands (assumed to be a high-frequency signal and a low-frequency signal). If three microphones (assumed to be an MIC a, an MIC b, and an MIC c respectively) are disposed on the first earbud, when the first earbud is in the non-wearing state, the MIC a, the MIC b, and the MIC c are all determined as talking microphones. After the MIC a, the MIC b, and the MIC c respectively receive a voice signal a, a voice signal b, and a voice signal c, a signal-to-noise ratio of a high-frequency signal and a signal-to-noise ratio of a low-frequency signal in each first voice signal are detected. If a signal-to-noise ratio of a high-frequency signal a in the voice signal a is the largest, and a signal-to-noise ratio of a low-frequency signal c in the voice signal c is the largest, the high-frequency signal a and the low-frequency signal c are synthesized to obtain a first voice signal. Finally, the first voice signal is sent to the terminal device.

In an example, after the microphone on the first earbud is determined as the talking microphone, the headset may turn off a speaker on the first earbud. A speaker on the other earbud may maintain a working state, and play a voice signal of another party in the call sent by the terminal device through the speaker after receiving the voice signal of the another party. To be specific, during the call, if the first earbud is in the non-wearing state, the microphone on the first earbud is used as the talking microphone. In this way, the talking microphone on the first earbud is configured to receive the first voice signal of the user, and the speaker on the other earbud is configured to play the voice signal of the another party.

The following uses use application scenarios of a TWS headset and a neckband headset as examples to describe the headset call method according to this application.

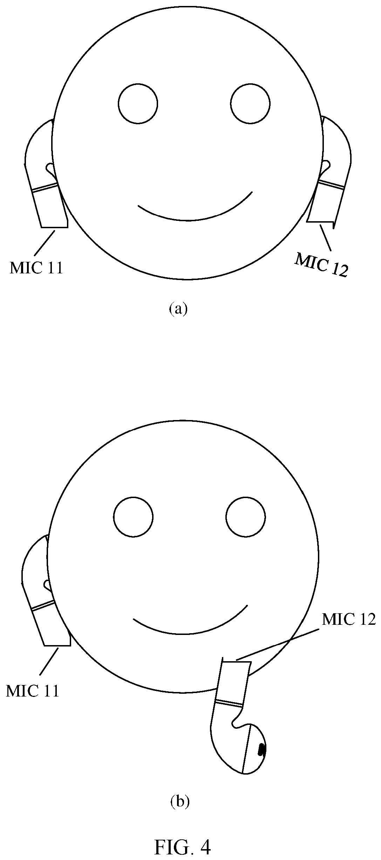

In the application scenario of the TWS headset, it is assumed that a left earbud and a right earbud of the TWS headset are separately worn on ears of a user (that is, in a wearing state). As shown in FIG. 4(a), the right earbud may be a primary earbud of the TWS headset, the primary earbud establishes a communication connection to a terminal device, and the left earbud may be a secondary earbud. When the terminal device starts a call (for example, the terminal device receives a call from another party in the call, or the terminal device makes a call to another party in the call), the right earbud may enter a call state, enable a MIC 11 as a talking microphone to receive a voice signal of the user, and notify the left earbud to enter a call state. In this case, both the left earbud and the right earbud are in the wearing state. After receiving a voice signal of the another party sent by the terminal device, the right earbud forwards the voice signal of the another party to the left earbud, to control speakers on the left earbud and the right earbud to synchronously play the voice signal of the another party. After the MIC 11 receives a first voice signal of the user, the right earbud sends the first voice signal to the terminal device, so that the terminal device sends the first voice signal to the another party.

Because an ambient noise is loud or the user needs to lower a voice volume, as shown in FIG. 4(b), the user may take off the left earbud from the left ear and place the left earbud near a lip. In this case, the left earbud detects that the left earbud is in a non-wearing state. The left earbud may send state information to the right earbud. In a possible implementation, based on the state information, the left earbud and the right earbud may directly perform function switching. To be specific, the left earbud is switched to the primary earbud to establish a communication connection to the terminal device, and the right earbud is switched to the secondary earbud to disconnect the communication connection to the terminal device. Correspondingly, the talking microphone is switched from the MIC 11 on the right earbud to a MIC 12 on the left earbud. After the switching, the left earbud may turn off the built-in speaker, and when receiving the voice signal of the another party sent by the terminal device, send the voice signal of the another party to the right earbud, so that the right earbud plays the voice signal of the another party through the built-in speaker. After the MIC 12 receives the first voice signal of the user, the left earbud sends the first voice signal of the user to the terminal device, so that the terminal device sends the first voice signal to the another party.

In another possible implementation, the talking microphone is switched from the MIC 11 to the MIC 12 based on the state information. The right earbud is still the primary earbud, and the left earbud is still the secondary earbud. After the switching, the right earbud continues to play, through the speaker, the voice signal of the another party received through the terminal device, and the left earbud may turn off the built-in speaker and stop playing the voice signal of the another party sent by the terminal device. Alternatively, after receiving the voice signal of the another party sent by the terminal device, the right earbud does not send the voice signal of the another party to the left earbud. After the MIC 12 receives the first voice signal of the user, the left earbud sends the first voice signal to the right earbud, so that the right earbud sends the first voice signal to the another party through the terminal device.

It may be understood that, according to the headset call method provided in this embodiment of this application, when the TWS headset is in the call state, a position of the talking microphone of the TWS headset is not limited to a wearing position of the primary earbud, and is not limited to a position near the ear of the user. The talking microphone may be moved to a position closer to a sound source (for example, a position near the lip of the user) along with the first earbud that is in the non-wearing state. Compared with the position near the ear of the user, after the talking microphone is moved to the position near the lip of the user, a signal-to-noise ratio of the received first voice signal is greater. Therefore, a voice effect of the headset can be enhanced to an extent.

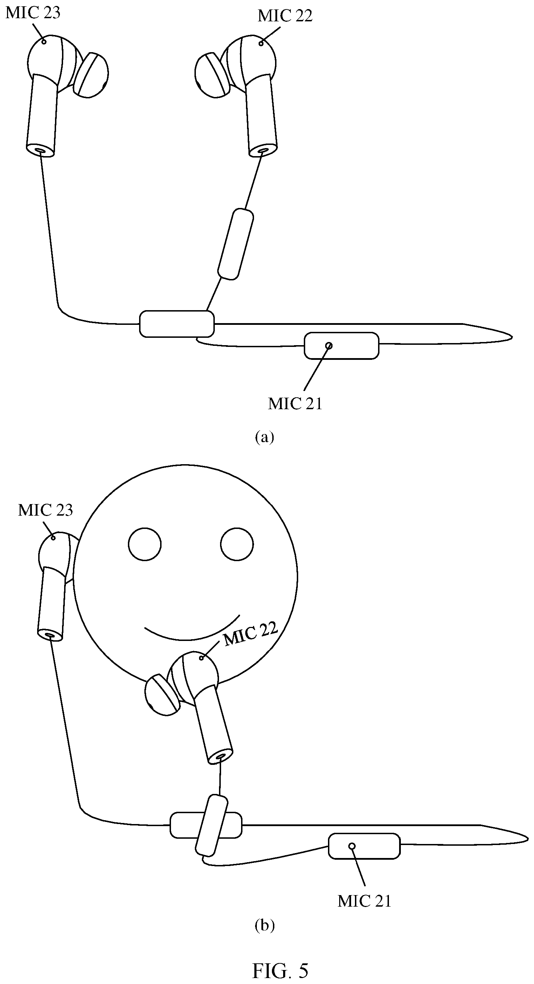

In the application scenario of the neckband headset, as shown in FIG. 5(a), in a normal wearing state, a left earbud and a right earbud of the neckband headset are separately worn on ears of a user. The neckband may be hung at a neck of the user. A microphone MIC 21 is disposed on a control module. It is assumed that a microphone MIC 22 is disposed on the left earbud, and a microphone MIC 23 is disposed on the right earbud. When a terminal device starts a call, the terminal device sends a call instruction to the control module. The control module enables, based on the call instruction, the MIC 21 as a talking microphone to receive a first voice signal of the user, and sends the first voice signal received by the MIC 21 to another party in the call through the terminal device. In addition, the control module sends a voice signal of the another party received through the terminal device to the left earbud and the right earbud, to control speakers in the left earbud and the right earbud to synchronously play the voice signal of the another party. In this case, both the left earbud and the right earbud are in a wearing state.

Because an ambient noise is loud or the user needs to lower a voice volume, as shown in FIG. 5(b), the user may take off the left earbud and place the left earbud near a lip. In this case, the left earbud detects that the left earbud is in a non-wearing state, and the left earbud may send state information to the control module. Based on the state information, the control module determines the MIC 23 on the left earbud as the talking microphone (for example, the talking microphone is switched from the MIC 21 to the MIC 23), and enables the MIC 23 to receive a voice signal. After receiving the voice signal, the MIC 23 sends the voice signal to the control module, and the control module sends the voice signal to the terminal device. After the switching, the control module may control the left earbud to turn off the built-in speaker, so that the left earbud stops playing the voice signal of the another party sent by the terminal device. Alternatively, when receiving the voice signal of the another party sent by the terminal device, the control module may send the voice signal of the another party to the right earbud instead of the left earbud.

It may be understood that, according to the headset call method provided in this embodiment of this application, when the neckband headset is in the call state, a position of the talking microphone of the neckband headset is not limited to a wearing position of the control module on the neckband, and is not limited to a position on the neck of the user. The talking microphone may be moved to a position closer to a sound source (for example, a position near the lip of the user) along with the first earbud that is in a non-wearing state. Compared with the position on the neck of the user, after the talking microphone is moved to the position near the lip of the user, a signal-to-noise ratio of the received first voice signal is greater. Therefore, a voice effect of the headset can be enhanced to an extent.

In an implementation, for example, when wearing the neckband headset, the user wears the right earbud on an ear, and hangs the left earbud in front of a chest along with the neckband. In this case, the microphone on the left earbud is used as the talking microphone, the first voice signal of the user is received through the talking microphone, and the voice signal of the another party is played through the speaker on the right earbud.

In some cases, the first earbud being in the non-wearing state may not be because the user wants to use the microphone on the first earbud as the talking microphone (for example, the user moves the first earbud to move the talking microphone closer to the sound source). For example, the first earbud falls off due to collision or improper wearing. In this case, if the headset still switches the talking microphone to the first earbud, the talking microphone is farther away from the sound source, resulting in a smaller signal-to-noise ratio of the voice signal received by the talking microphone. Therefore, to avoid incorrect switching, after determining that the first earbud is in the non-wearing state, the headset may further perform signal-to-noise ratio detection. The headset detects the signal-to-noise ratio of the first voice signal received by the microphone on the first earbud and a signal-to-noise ratio of a voice signal received by a current talking microphone. When the signal-to-noise ratio of the first voice signal received by the microphone on the first earbud is greater than the signal-to-noise ratio of the voice signal received by the current talking microphone, the microphone on the first earbud is switched to be the talking microphone.

For example, in FIG. 4(b), after the left earbud detects that the left earbud is in the non-wearing state, the left earbud may send the voice signal received by the MIC 12 and the state information together to the right earbud. The right headset determines, based on the state information, that the left earbud is in the non-wearing state, and compares a signal-to-noise ratio 12 of the voice signal received by the MIC 12 with a signal-to-noise ratio 11 of the voice signal received by the current talking microphone MIC 11. If the signal-to-noise ratio 12 is greater than the signal-to-noise ratio 11, it indicates that the MIC 12 is closer to the sound source than the current talking microphone MIC 11. In this case, the left earbud and the right earbud may switch the talking microphone from the MIC 11 to the MIC 12. If the signal-to-noise ratio 12 is less than or equal to the signal-to-noise ratio 11, it indicates that the MIC 12 is not closer to the sound source than the current talking microphone MIC 11. In this case, the MIC 11 continues to be used as the talking microphone.

For another example, in FIG. 5(b), after the left earbud detects that the left earbud is in the non-wearing state, the left earbud may send the state information and the voice signal received by the MIC 23 to the control module. The control module determines, based on the state information, that the left earbud is in the non-wearing state, and compares a signal-to-noise ratio 23 of the voice signal received by the MIC 23 with a signal-to-noise ratio 21 of the voice signal received by the current talking microphone MIC 21. If the signal-to-noise ratio 23 is greater than the signal-to-noise ratio 21, it indicates that the MIC 23 is closer to the sound source than the current talking microphone MIC 21. In this case, the control module may switch the talking microphone from the MIC 21 to the MIC 23. If the signal-to-noise ratio 23 is less than or equal to the signal-to-noise ratio 21, it indicates that the MIC 23 is not closer to the sound source than the current talking microphone MIC 21. In this case, the MIC 21 continues to be used as the talking microphone.

The following describes examples of the foregoing talking microphone switching process based on different settings and different structures of the headset. As examples, the following describes four possible implementations.

Manner 1: Detect a state of a first earbud based on a wearing sensor, and perform talking microphone switching.

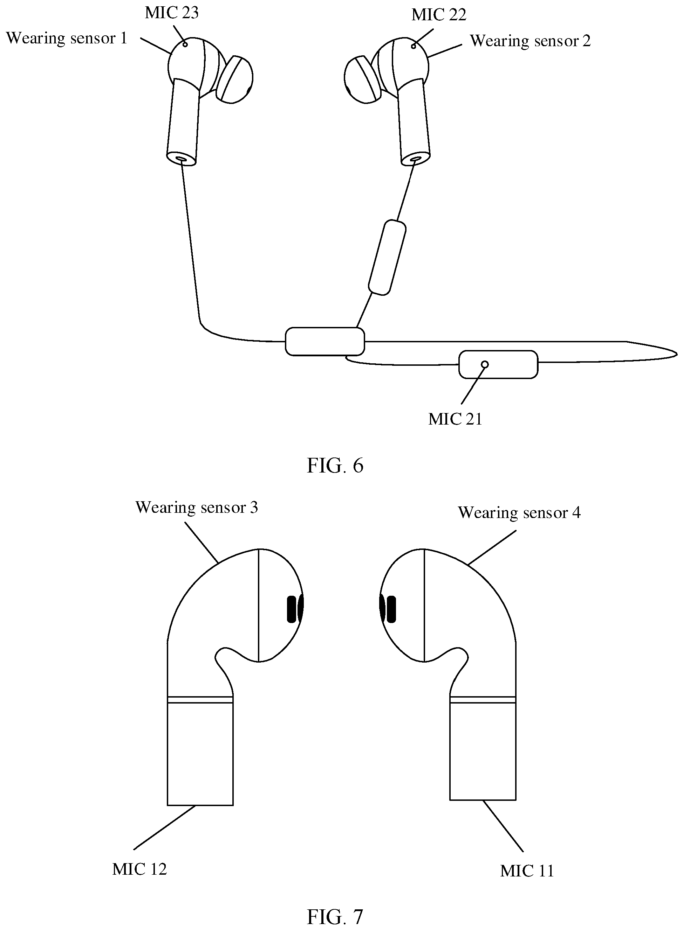

A wearing sensor is separately disposed on the left earbud and/or the right earbud of the headset. For example, as shown in FIG. 6, a wearing sensor 1 is disposed on the left earbud of the neckband headset, a wearing sensor 2 is disposed on the right earbud, and both the left earbud and the right earbud of the neckband headset may be first earbuds. As shown in FIG. 7, a wearing sensor 3 is disposed on the left earbud of the TWS headset, a wearing sensor 4 is disposed on the right earbud, and both the left earbud and the right earbud of the TWS headset are first earbuds. The headset may detect, by using the wearing sensor, whether an earbud is in a wearing state or a non-wearing state. The wearing sensor may be a pressure sensor, a temperature sensor, a distance sensor, a light sensor, an acceleration sensor, an in-ear detection sensor, or the like. Alternatively, the wearing sensor may include a front light distance sensor, a rear light distance sensor, a motion acceleration sensor, or the like. Alternatively, the wearing sensor may be another type of sensor. This is not limited in this application.

For example, if the wearing sensor disposed on the earbud is a pressure sensor, when the user wears the earbud on an ear, the earbud is squeezed by the ear, so that the pressure sensor on the earbud generates a pressure value signal. For example, a pressure value threshold may be set. When the pressure value signal generated by the pressure sensor is greater than or equal to the pressure value threshold, it is determined that the earbud is in the wearing state. When the pressure value signal generated by the pressure sensor is less than the pressure value threshold, it is determined that the earbud is in the non-wearing state.

If the wearing sensor disposed on the earbud is a temperature sensor, when the user wears the earbud on an ear, the temperature sensor on the earbud generates a temperature value signal corresponding to a human body temperature. For example, a temperature value range corresponding to the human body temperature may be set. When the temperature value signal generated by the temperature sensor is within the temperature value range, it is determined that the earbud is in the wearing state. When the temperature value signal generated by the temperature sensor is not within the temperature value range, it is determined that the earbud is in the non-wearing state.

If the wearing sensor disposed on the earbud is a distance sensor, when the user wears the earbud on an ear, the earbud is squeezed by the ear, so that the distance sensor on the earbud detects that a distance value signal becomes smaller. For example, a distance value threshold may be set. When the distance value signal generated by the distance sensor is greater than or equal to the distance value threshold, it is determined that the earbud is in the non-wearing state. When the distance value signal generated by the distance sensor is less than the distance value threshold, it is determined that the earbud is in the wearing state. If the headset is a TWS headset, after the first earbud is taken out of a charging case, the TWS headset may detect whether the distance value signal generated by the distance sensor is greater than or equal to the distance value threshold.

If the wearing sensor disposed on the earbud is a light sensor, when the user wears the earbud on an ear, light intensity detected by the light sensor on the earbud is small. In this application, a light intensity threshold may be set. When a light intensity signal generated by the light sensor is greater than or equal to the light intensity threshold, it is determined that the earbud is in the non-wearing state. When the light intensity signal generated by the light sensor is less than the light intensity threshold, it is determined that the earbud is in the wearing state. If the headset is a TWS headset, after the earbud is taken out of a charging case, the TWS headset may detect whether the light intensity signal generated by the light sensor is less than the light intensity value threshold.

If the wearing sensor disposed on the earbud is an acceleration sensor, when the user picks up the earbud and wears the earbud on an ear, or takes off the earbud from the ear, an acceleration change rate measured by the acceleration sensor on the earbud changes. In this application, an acceleration change rate range when the earbud is taken off and an acceleration change rate range when the earbud is worn may be set separately. Then, whether the earbud is in the wearing state or the non-wearing state is determined based on the two acceleration change ranges and an acceleration signal generated by the acceleration sensor on the earbud.

If the wearing sensor includes the front light distance sensor, the rear light distance sensor, and the motion acceleration sensor, when the earbud is taken out of a charging case, the motion acceleration sensor detects a speed change; and when the earbud is worn, the ear covers the front and rear light distance sensors, and the distance reaches a preset value, it is determined that the earbud is in the ear and is in the wearing state. The preset value may be set to different values according to an actual situation. This is not limited in this embodiment of the present invention.

For example, the neckband headset shown in FIG. 6 is used as an example. In a call state, the wearing sensor 1 and the wearing sensor 2 may separately periodically detect states of the earbuds to which the wearing sensor 1 and the wearing sensor 2 belong, and send obtained detection information to the control module. When the control module determines, based on the detection information, that one earbud (assumed to be the right earbud) is in a wearing state and the other earbud (assumed to be the left earbud) is in a non-wearing state, the control module may determine that the left earbud may perform talking microphone switching. In an implementation, to avoid false triggering, the control module may first trigger signal-to-noise ratio detection to compare signal-to-noise ratios of voice signals received by the current talking microphone MIC 21 and the MIC 23. If it is detected that the signal-to-noise ratio of the voice signal received by the MIC 23 is larger, the MIC 23 is determined as the talking microphone.

If the user wears the left earbud back on the left ear again, and the control module determines, based on detection information sent by the wearing sensor 1 and the wearing sensor 2, that both the left earbud and the right earbud are in the wearing state, the control module may not make a response, and the MIC 23 is still the talking microphone. If the user wants to use another ear to listen to the call, the user wears the left earbud back on the left ear, takes off the right earbud, and moves the right earbud to a position near the lip. In this case, the control module may determine, based on detection information sent by the wearing sensor 1 and the wearing sensor 2, that the left earbud is in the wearing state and the right earbud is in the non-wearing state. The control module may trigger signal-to-noise ratio detection again, to compare signal-to-noise ratios of voice signals received by the current talking microphone MIC 23 and the MIC 22. If it is detected that the signal-to-noise ratio of the voice signal received by the MIC 22 is larger, the MIC 22 is determined as the talking microphone.

The TWS headset shown in FIG. 7 is used as an example. In a call state, the wearing sensor 3 and the wearing sensor 4 separately periodically detect states of the earbuds to which the wearing sensor 3 and the wearing sensor 4 belong. When the wearing sensor 3 in the secondary earbud (assumed to be the left earbud) detects that the left earbud is in the non-wearing state, the wearing sensor 3 sends the obtained detection information to the primary earbud (assumed to be the right earbud). When the right earbud determines, based on the detection information of the wearing sensor 4, that the right earbud is in the wearing state, signal-to-noise ratio detection may be triggered, and signal-to-noise ratios of voice signals received by the current talking microphone MIC 11 and the MIC 12 are compared. If it is detected that the signal-to-noise ratio of the voice signal received by the MIC 12 is larger, the right earbud and the left earbud may determine the MIC 12 as the talking microphone. For example, the left earbud is switched to be the primary earbud, and the right earbud is switched to be the secondary earbud. Alternatively, the talking microphone is switched from the MIC 11 to the MIC 12.

If the user wears the left earbud back on the left ear again, the MIC 12 may continue to be used as the talking microphone to receive the voice signal. If the user wants to use another ear to listen to the call, the user wears the left earbud back on the left ear, takes off the right earbud, and moves the right earbud to a position near the lip. If the left earbud and the right earbud directly perform function switching between the primary earbud and the secondary earbud, the left earbud is the primary earbud, and the right earbud is the secondary earbud. In this case, when the wearing sensor 4 detects that the right earbud is in a non-wearing state, the right earbud may send the detection information obtained by the wearing sensor 4 to the left earbud. When the left earbud determines, based on the detection information currently obtained by the wearing sensor 3, that the left earbud is in a wearing state, signal-to-noise ratio detection may be triggered, and signal-to-noise ratios of voice signals received by the current talking microphone MIC 12 and the MIC 11 are compared. If it is detected that the signal-to-noise ratio of the voice signal received by the MIC 11 is larger, the right earbud is switched to the primary earbud, and the left earbud is switched to the secondary earbud. Correspondingly, the talking microphone is switched from the MIC 12 to the MIC 11.

It is assumed that the left earbud and the right earbud directly perform talking microphone switching, that is, the left earbud is still the secondary earbud, the right earbud is still the primary earbud, and the talking microphone is the MIC 12. In this case, when the wearing sensor 4 detects that the right earbud is in the non-wearing state, if the right earbud does not receive detection information sent by the left earbud, or the right earbud receives detection information indicating that the left earbud is in the wearing state, the right earbud may trigger a signal-to-noise ratio detection process, and compare signal-to-noise ratios of voice signals received by the current talking microphone MIC 12 and the MIC 11. If it is detected that the signal-to-noise ratio of the voice signal received by the MIC 11 is larger, the talking microphone is switched from the MIC 12 to the MIC 11.

Manner 2: Detect a state of an earbud based on a switch, and perform talking microphone switching.

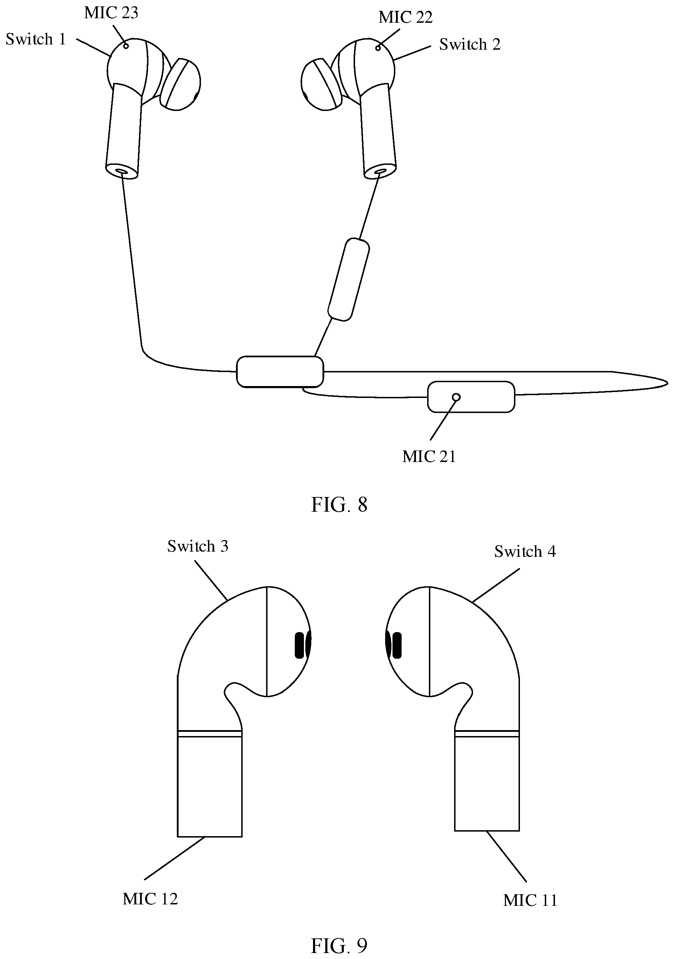

Switches/a switch are/is disposed on the left earbud and/or the right earbud of the headset. For example, as shown in FIG. 8, a switch 1 is disposed on the left earbud of the neckband headset, and a switch 2 is disposed on the right earbud. As shown in FIG. 9, a switch 3 is disposed on the left earbud of the TWS headset, and a switch 4 is disposed on the right earbud. The switch may be a touch button, a push switch, a rocker switch, or the like. If the switch is a touch button, it may be set, based on a touch rule, that the switch is turned on with an operation such as a double-tap short press, a triple-tap short press, or a single-tap long press.

When the user needs to move the talking microphone closer to the sound source, the user may trigger talking microphone switching by turning on the switch on the first earbud. The headset may determine a state corresponding to the first earbud based on switch information. To be specific, when the headset detects that the switch on the first earbud is turned on, the headset may consider that the first earbud is in the non-wearing state, and talking microphone switching may be performed.

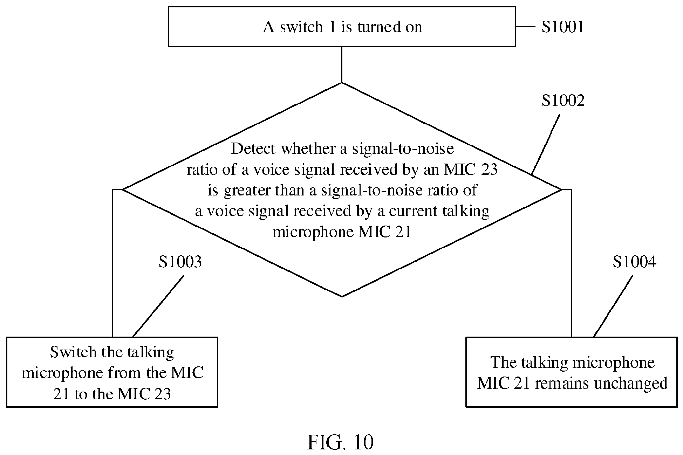

For example, a microphone switching procedure of the neckband headset shown in FIG. 8 may be shown in FIG. 10, and may include the following steps.

S1001: The switch 1 is turned on.

During a call, when the user needs to use the microphone on the left earbud, the user moves the left earbud to a position close to the sound source, and turns on the switch 1 on the left earbud. In this case, the left earbud detects switch information that is used to indicate that the switch 1 is turned on, and sends the switch information to the control module. The control module determines, based on the switch information, that the left earbud is in the non-wearing state, and that talking microphone switching may be performed. The control module may directly switch the talking microphone from the MIC 21 to the MIC 23. In an implementation, to avoid a misoperation (for example, an operation that the user unintentionally touches the switch 1 and causes the switch 1 to be turned on), the control module may trigger signal-to-noise ratio detection, and perform step S1002.

S1002: Detect whether a signal-to-noise ratio of a voice signal received by the MIC 23 is greater than a signal-to-noise ratio of a voice signal received by the current talking microphone MIC 21.

If the signal-to-noise ratio of the voice signal received by the MIC 23 is greater than the signal-to-noise ratio of the voice signal received by the current talking microphone MIC 21, it indicates that the MIC 23 is closer to the sound source than the MIC 21, and it may be understood that the user moves the MIC 23 to a position closer to the sound source. In this case, the control module may perform step S1003 to switch the talking microphone from the MIC 21 to the MIC 23.

If the signal-to-noise ratio of the voice signal received by the MIC 23 is less than or equal to the signal-to-noise ratio of the voice signal received by the current talking microphone MIC 21, it indicates that the MIC 23 is not closer to the sound source than the MIC 21, that is, the user does not move the MIC 23 to a position closer to the sound source. In this case, the control module may not perform the switching operation, and may perform S1004 to determine that the talking microphone MIC 21 remains unchanged.

It is assumed that after the talking microphone is switched to the MIC 23, the user wants to use another ear to listen to the call. After wearing the left earbud back on the left ear, the user takes off the right earbud, moves the right earbud to a position near the lip, and turns on the switch 2. In this case, the right earbud detects switch information that is used to indicate that the switch 2 is turned on, and sends the switch information to the control module. The control module determines, based on the switch information, that the right earbud is in the non-wearing state, and that talking microphone switching may be performed. The control module may directly switch the talking microphone from the MIC 23 to the MIC 22. In an implementation, to avoid a misoperation, the control module may trigger signal-to-noise ratio detection to detect whether a signal-to-noise ratio of a voice signal received by the MIC 22 is greater than the signal-to-noise ratio of the voice signal received by the current talking microphone MIC 23. If it is detected that the signal-to-noise ratio of the voice signal received by the MIC 22 is larger, the talking microphone is switched from the MIC 23 to the MIC 22.

Similarly, for the TWS headset, if a switch is disposed on the first earbud of the TWS headset, once the switch on the first earbud is turned on, it may be determined that the first earbud is in the non-wearing state. For specific switching, refer to talking microphone switching of the neckband headset. Details are not described herein again.

Manner 3: Detect a state of the first earbud based on a plurality of microphones, and perform talking microphone switching.

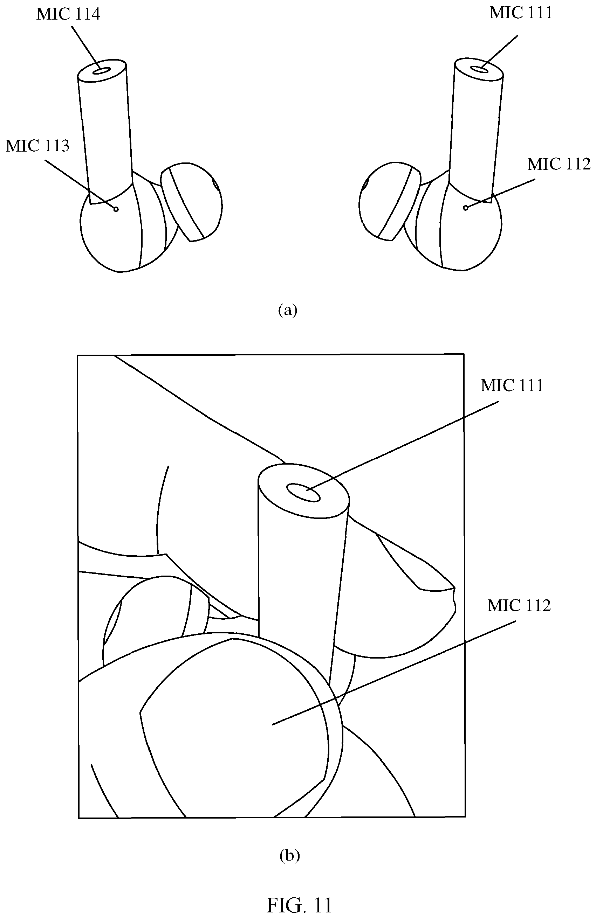

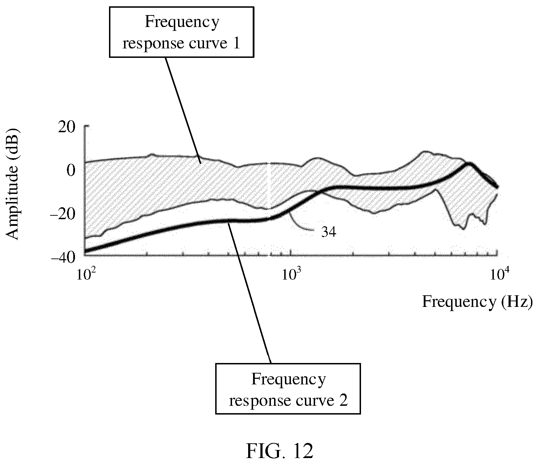

When a user pinches the first earbud into a hand, if a finger blocks the microphone on the first earbud, a signal-to-noise ratio of a voice signal received by the microphone definitely decreases. For example, as shown in FIG. 11(a), an MIC 111 and an MIC 112 are disposed on the left earbud of the TWS headset, and an MIC 113 and an MIC 114 are disposed on the right earbud. As shown in FIG. 11(b), when pinching the left earbud, the user may block the MIC 112 with a finger. As shown in FIG. 12, when the MIC 112 is not blocked, a frequency response curve of a received voice signal is a frequency response curve 1. After the MIC 112 is blocked, a frequency response curve of a received voice signal is a frequency response curve 2. It can be learned that, in a low-frequency (for example, below 1000 Hz) band, compared with an unblocked MIC 112, a signal-to-noise ratio of the voice signal received by the blocked MIC 112 decreases. When the user pinches the first earbud in the hand, it is very likely that the first earbud is not worn on an ear. Based on this principle, if a plurality of microphones (including a first microphone and a second microphone) are disposed on the first earbud, whether the first microphone is blocked may be further detected based on a change of a signal-to-noise ratio of a voice signal received by the first microphone, to detect a state of the first earbud. When the first earbud is in a non-wearing state, the second microphone is determined as a talking microphone. Certainly, there may be one or more second microphones. If there are a plurality of second microphones, it may be determined that at least one of the second microphones is the talking microphone.

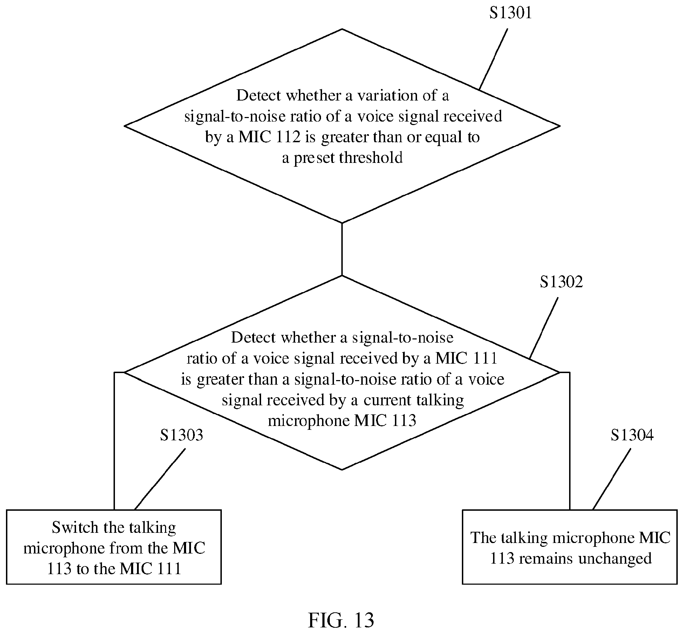

For example, a microphone switching procedure of the TWS headset shown in FIG. 11 may be shown in FIG. 13, and may include the following steps.

S1301: Detect whether a variation of the signal-to-noise ratio of the voice signal received by the MIC 112 is greater than or equal to a preset threshold.

It is assumed that the first microphone of the right earbud is the MIC 114, the second microphone is the MIC 113, the first microphone of the left earbud is the MIC 112, and the second microphone is the MIC 111. If the right earbud is a primary earbud, the left earbud is a secondary earbud, and a current talking microphone is the MIC 113, during a call, when the user needs to use the MIC 111 on the left earbud as the talking microphone, the user pinches the left earbud according to FIG. 11(b), and then moves the left earbud to a position close to a sound source. In this case, the left earbud sends voice signals received by the MIC 113 and the MIC 114 to the right earbud. The right earbud detects whether a signal-to-noise ratio of a voice signal received by the MIC 113 changes. If a variation is greater than or equal to the preset threshold (for example, 20 dB or 15 dB), it indicates that the MIC 113 is blocked, and the right earbud may determine that the left earbud is in a non-wearing state. In this case, the right earbud and the left earbud may switch the talking microphone from the MIC 113 to the MIC 111. To avoid a misoperation (for example, the user unintentionally blocks the MIC 112 with a finger, or the user only wants to take off the left earbud), the right earbud may trigger signal-to-noise ratio detection, and the following step S1302 is performed. Certainly, if a variation is less than the preset threshold, the right earbud may not perform a related switching operation, and may perform S1304 to determine that the talking microphone MIC 113 remains unchanged.

S1302: Detect whether a signal-to-noise ratio of a voice signal received by the MIC 111 is greater than the signal-to-noise ratio of the voice signal received by the current talking microphone MIC 113.

If the signal-to-noise ratio of the voice signal received by the MIC 111 is greater than the signal-to-noise ratio of the voice signal received by the current talking microphone MIC 1113, it indicates that the MIC 111 is closer to the sound source than the MIC 113, and it may be understood that the user moves the MIC 111 to a position closer to the sound source. In this case, the right earbud may perform step S1303 to switch the talking microphone from the MIC 113 to the MIC 111. That is, the right earbud and the left earbud may directly perform function switching, or only the talking microphone may be switched.

If the signal-to-noise ratio of the voice signal received by the MIC 111 is less than or equal to the signal-to-noise ratio of the voice signal received by the current talking microphone MIC 113, it indicates that the MIC 111 is not closer to the sound source than the MIC 113, that is, the user does not move the MIC 111 to a position closer to the sound source. In this case, the right earbud may not perform the switching operation, and may perform S1304 to determine that the talking microphone MIC 113 remains unchanged.

Similarly, for a neckband headset, if a plurality of microphones are disposed on earbuds of the neckband headset, one of the microphones may be set to detect a state of an earbud in a call process. A control module may determine, based on a variation of a signal-to-noise ratio of a voice signal received by a designated microphone on the first earbud, whether the first earbud is in a non-wearing state, to further control the talking microphone switching. Details are not described herein.

Manner 4: For an active noise cancellation (Active Noise Cancellation, ANC) headset, detect a state of a first earbud based on a change of signal-to-noise ratios of voice signals received by a front-facing microphone and a rear-facing microphone on the ANC headset to perform talking microphone switching.

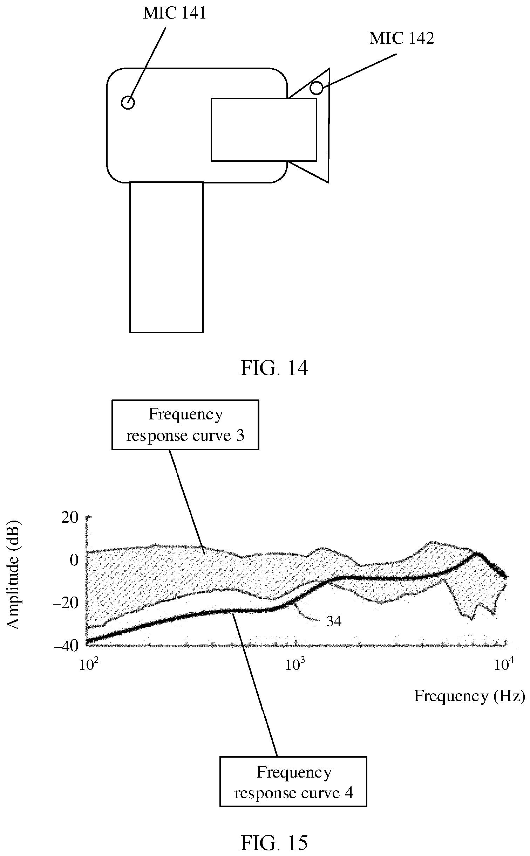

FIG. 14 is a schematic diagram of one first earbud in an ANC headset. A front-facing microphone MIC 141 and a rear-facing microphone MIC 142 are disposed on the first earbud. When the first earbud is worn on an ear of a user, the MIC 141 is usually located outside the ear, and the MIC 142 is usually located inside the ear (which may be understood as that the MIC 142 is blocked by the ear). As shown in FIG. 15, when the first earbud is in a wearing state, a frequency response curve of a voice signal received by the MIC 141 may be a frequency response curve 3, and a frequency response curve of a voice signal received by the MIC 142 may be a frequency response curve 4. It can be seen that, in a low-frequency (for example, below 1000 Hz) band, a signal-to-noise ratio of the voice signal received by the MIC 142 is less than a signal-to-noise ratio of the voice signal received by the MIC 141. When the first earbud is in a non-wearing state, because the MIC 141 and the MIC 142 are in a same environment, a difference between the signal-to-noise ratio of the voice signal received by the MIC 142 and the signal-to-noise ratio of the voice signal received by the MIC 141 decreases. Based on this principle, if the headset is an ANC headset, the headset may detect the state of the first earbud based on the signal-to-noise ratio change or intensity change of voice signals received by the front-facing microphone and the rear-facing microphone on the first earbud.

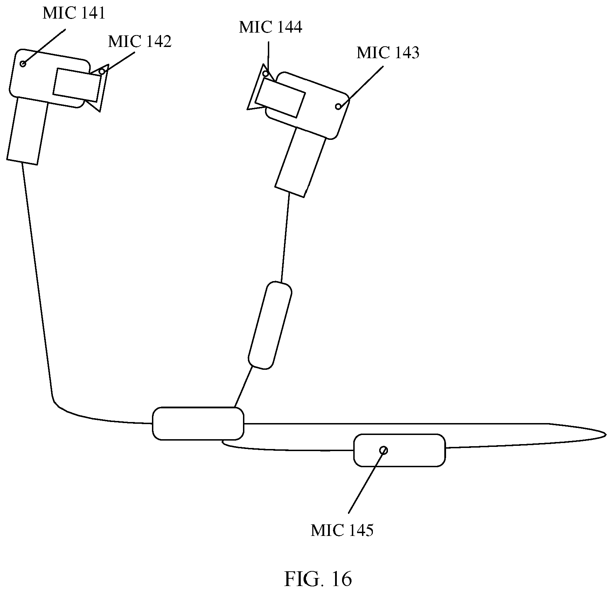

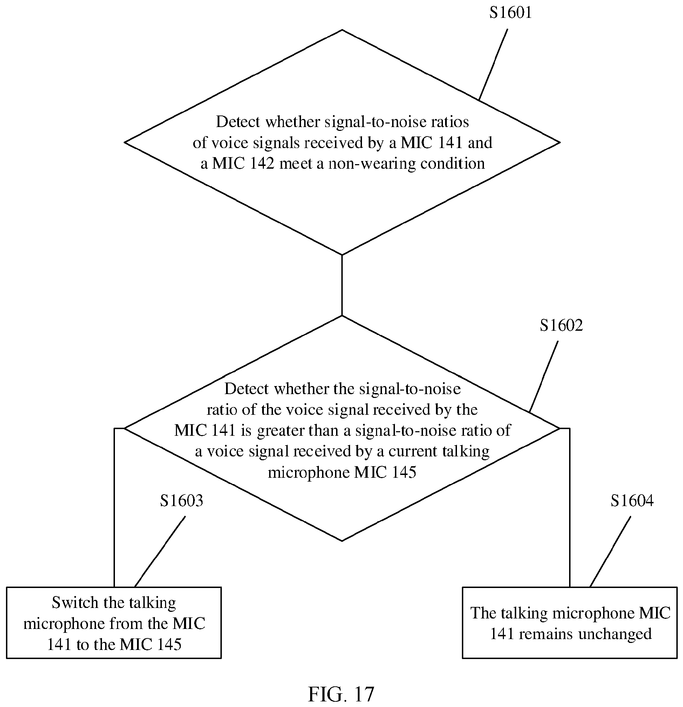

For example, on a neckband headset shown in FIG. 16, a front-facing microphone (the MIC 141) and a rear-facing microphone (the MIC 142) are disposed on a left earbud, and a front-facing microphone (the MIC 143) and a rear-facing microphone (the MIC 144) are disposed on a right earbud, an MIC 145 is disposed on a control module. The signal-to-noise ratio change is used as an example, and a microphone switching procedure of the neckband headset may be shown in FIG. 17, and includes the following steps.

S1601: Detect whether signal-to-noise ratios of voice signals received by the MIC 141 and the MIC 142 meet a non-wearing condition.

During a call, when the user needs to use the microphone on the left earbud as the talking microphone, the user pinches the left earbud in a hand, and then moves the left earbud to a position close to a sound source. In this case, the left earbud may send the voice signals received by the MIC 141 and the MIC 142 to the control module, and the control module determines whether the signal-to-noise ratios of the voice signals received by the MIC 141 and the MIC 142 meet the non-wearing condition, to determine whether the left earbud is in a non-wearing state. The non-wearing condition may be that an absolute value of a difference between signal-to-noise ratios of voice signals received by the MIC 141 and the MIC 142 is less than a preset difference (for example, 3 dB or 5 dB). It is clear that the left earbud may also determine whether the signal-to-noise ratios of the voice signals received by the MIC 141 and the MIC 142 meet the non-wearing condition, and then indicate, in a case in which the non-wearing condition is met, the control module to perform talking microphone switching.

If the control module determines that the left earbud is in the non-wearing state, the control module may switch the talking microphone from the MIC 145 to the MIC 141 or the MIC 142. In this embodiment of this application, it may be specified in advance that the front-facing microphone may be used as the talking microphone, or the rear-facing microphone may be used as the talking microphone. Assuming that the front-facing microphone is designated as the talking microphone, the control module may switch the talking microphone from the MIC 145 to the MIC 141. In an implementation, to avoid a misoperation, the control module may trigger signal-to-noise ratio detection, and may perform the step S1602 below.

S1602: Detect whether the signal-to-noise ratio of the voice signal received by the MIC 141 is greater than the signal-to-noise ratio of the voice signal received by the current talking microphone MIC 145.

If the signal-to-noise ratio of the voice signal received by the MIC 141 is greater than the signal-to-noise ratio of the voice signal received by the current talking microphone MIC 145, it indicates that the MIC 141 is closer to the sound source than the MIC 145, and it may be understood that the user moves the MIC 141 to a position closer to the sound source. In this case, the control module may perform step S1603 to switch the talking microphone from the MIC 141 to the MIC 145.

If the signal-to-noise ratio of the voice signal received by the MIC 141 is less than or equal to the signal-to-noise ratio of the voice signal received by the current talking microphone MIC 145, it indicates that the MIC 141 is not closer to the sound source than the MIC 145, that is, the user does not move the MIC 141 to a position closer to the sound source. In this case, the control module may not perform the switching operation, and may perform S1604 to determine that the talking microphone MIC 145 remains unchanged.

It may be understood that, after the talking microphone is switched to the MIC 141, the user wants to have the call with another ear. After wearing the left earbud back on the left ear, the user takes off the right earbud, and moves the right earbud to a position near the lip. In this case, the signal-to-noise ratios of the voice signals received by the MIC 143 and the MIC 144 on the right earbud meet the non-wearing condition, so the right earbud is in a non-wearing state, and talking microphone switching may be performed. The control module may switch the talking microphone from the MIC 141 to the MIC 143. In an implementation, to avoid a misoperation, the control module may trigger signal-to-noise ratio detection to detect whether the signal-to-noise ratio of the voice signal received by the MIC 141 is greater than the signal-to-noise ratio of the voice signal received by the current talking microphone MIC 143. If it is detected that the signal-to-noise ratio of the voice signal received by the MIC 143 is larger, the talking microphone is switched from the MIC 141 to the MIC 143.

Similarly, for a TWS headset, if the TWS headset is an ANC headset, a front-facing microphone and a rear-facing microphone are disposed on a first earbud of the TWS headset. Whether an earbud is in a non-wearing state may be learned based on signal-to-noise ratios of voice signals received by the front-facing microphone and the rear-facing microphone. Once the signal-to-noise ratios of the voice signals received by the front-facing microphone and the rear-facing microphone meet the non-wearing condition, it may be determined that the earbud is in the non-wearing state, and talking microphone switching may be performed. A specific switching procedure is not described herein again.

In conclusion, according to the headset call method provided in this embodiment of this application, a microphone on a first earbud that is in the non-wearing state is switched to be a talking microphone. In this way, a position of the talking microphone is no longer limited to a wearing position of an earbud or a wearing position of a control module. In an environment with loud ambient noise or a low sound source volume, when a user needs to use a headset to have a call, the user may move the first earbud to a position close to a sound source (for example, a position near a lip of the user). In this way, the headset may detect that the first earbud at the position close to the sound source is in the non-wearing state, and use the microphone on the first earbud as the talking microphone. Because the talking microphone is closer to the sound source, intensity of a user voice received by the talking microphone can be increased to some extent, to improve a signal-to-noise ratio of a first voice signal, and further enhance a voice effect of the headset in a call process.

In an implementation, after the talking microphone is switched to the microphone on the first earbud that is in the non-wearing state, further noise cancellation may be performed on the first voice signal received by the talking microphone, to further increase the signal-to-noise ratio of the first voice signal, and further enhance the voice effect of the headset in the call process.

For example, before sending the voice signal received by the talking microphone to a terminal device, the headset may first perform noise cancellation on the voice signal, and then send the voice signal after noise cancellation to the terminal device.

For example, a possible noise cancellation manner is differential noise cancellation. At least one remaining microphone on an earbud other than the talking microphone is used as a noise cancellation microphone. A differential operation is performed on the voice signal received by the talking microphone and a voice signal received by the noise cancellation microphone, to obtain a voice signal after noise cancellation.

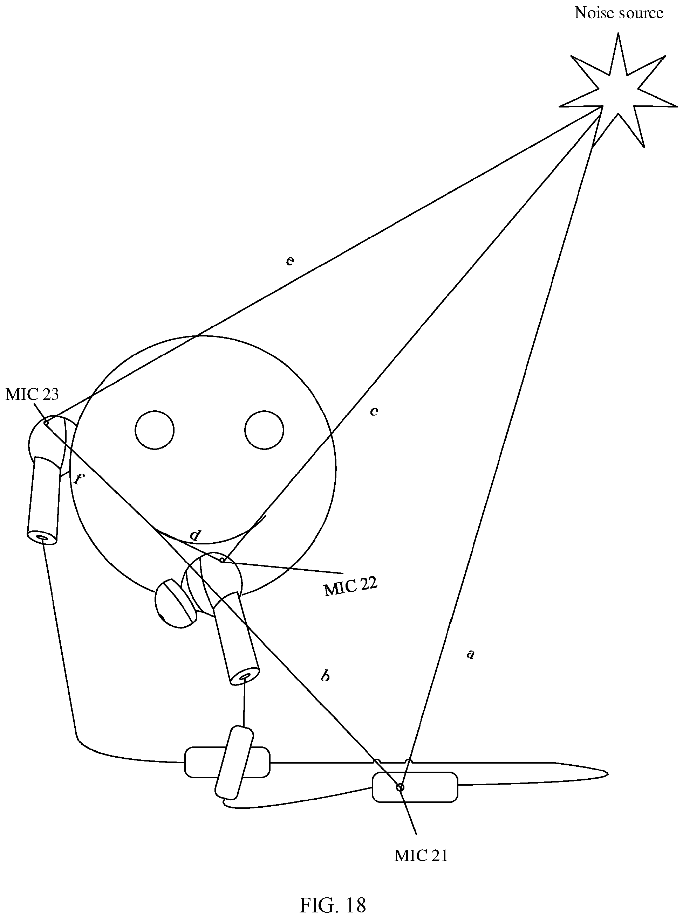

For example, as shown in FIG. 18, a left earbud of a neckband headset is moved to a position near a lip of a user. A voice signal 21 received by an MIC 21 includes a noise signal a and a user voice signal b, a voice signal 22 received by an MIC 22 includes a noise signal c and a user voice signal d, and a voice signal 23 received by an MIC 23 includes a noise signal e and a user voice signal f. For a far-field noise, distances from a noise source to the MIC 21, the MIC 22, and the MIC 23 are similar, so strength of the noise signal a, strength of the noise signal c, and strength of the noise signal e are similar. For a near-field user voice, a distance from a sound source to the MIC 23 is far less than distances from the sound source to the MIC 21 and the MIC 22. Therefore, strength of the user voice signal b is far greater than strength of the user speech signal d and strength of the user speech signal f.

If the MIC 21 is set as the noise cancellation microphone, the control module subtracts the voice signal 21 from the voice signal 23 to obtain a voice signal after noise cancellation, and then sends the voice signal after noise cancellation to the terminal device. It may be understood that the voice signal after noise cancellation is (e + f) - (a + b). Because e is close to a, and f is far greater than b, the voice signal after noise cancellation may be approximately the user voice signal f. It can be learned that the ambient noise is eliminated, the signal-to-noise ratio of the voice signal is improved, and the voice effect of the headset in the call process is further enhanced.

Similarly, if the MIC 22 is set as the noise cancellation microphone, the right earbud sends the voice signal 22 to the control module, and the control module subtracts the voice signal 22 from the voice signal 23 to obtain a voice signal after noise cancellation, and then sends the voice signal after noise cancellation to the terminal device. Correspondingly, the voice signal after noise cancellation is (e + f) - (c + d). Because e is close to c, and f is far greater than d, the voice signal after noise cancellation may be approximately the user voice signal f. It can be learned that the ambient noise is eliminated, the signal-to-noise ratio of the voice signal is improved, and the voice effect of the headset in the call process is further enhanced.

If both the MIC 21 and the MIC 22 are noise cancellation microphones, after obtaining the voice signal 23, the voice signal 21, and the voice signal 22, the control module subtracts the voice signal 21 and the voice signal 22 from twice the voice signal 23 and divides a difference by 2 to obtain a voice signal after noise cancellation, and then sends the voice signal after noise cancellation to the terminal device. Correspondingly, the voice signal after noise cancellation is ((e + f) * 2 - (a + b) - (c + d))/2. Because e, c and a are close, and f is far greater than b and d, the voice signal after noise cancellation may be approximately the user voice signal f. It can be learned that the ambient noise is eliminated, the signal-to-noise ratio of the voice signal is improved, and the voice effect of the headset in the call process is further enhanced.

Similarly, for a TWS headset, if a talking microphone is located on a secondary earbud, a microphone on a primary earbud is a noise cancellation microphone. The secondary earbud sends a voice signal a received by the talking microphone to the primary earbud. After the noise cancellation microphone on the primary earbud receives a voice signal b, the primary earbud performs differential noise cancellation, that is, subtracts the voice signal b from the voice signal a to obtain a voice signal after noise cancellation, and then sends the voice signal after noise cancellation to a terminal device. If a talking microphone is located on a primary earbud, a microphone on a secondary earbud is a noise cancellation microphone. The secondary earbud sends a voice signal b received by the noise cancellation microphone to the primary earbud. After receiving a voice signal a, the talking microphone on the primary earbud may subtract the voice signal b from the voice signal a to obtain a voice signal after noise cancellation, and then send the voice signal after noise cancellation to a terminal device.

In addition, another noise cancellation method may be used to perform noise cancellation on the voice signal received by the talking microphone, for example, an adaptive beamforming algorithm, a spectral subtraction method, and an adaptive filtering algorithm. Details are not described herein again.

In a scenario when a user has a call by using a headset, the user may autonomously determine, based on an environment, whether to move a first earbud to a position closer to a sound source. Alternatively, the user may move the first earbud based on feedback of another party in the call. For example, when the user is in a call, the another party may say "I cannot hear you clearly". In this case, the user may move one first earbud to a position near a lip, so that a talking microphone is closer to the sound source, to ensure a sound receiving effect.

In an implementation, based on the headset call method provided in this embodiment of this application, this embodiment of this application further provides a prompt manner performed by a terminal device.

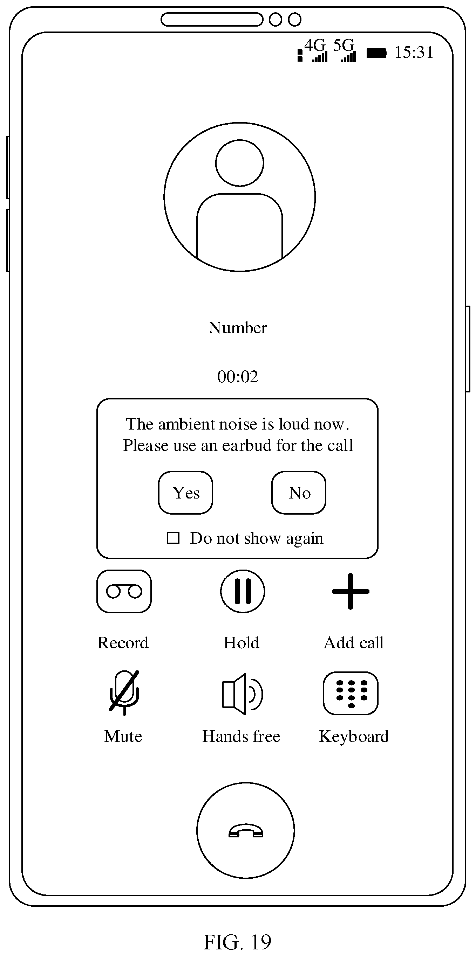

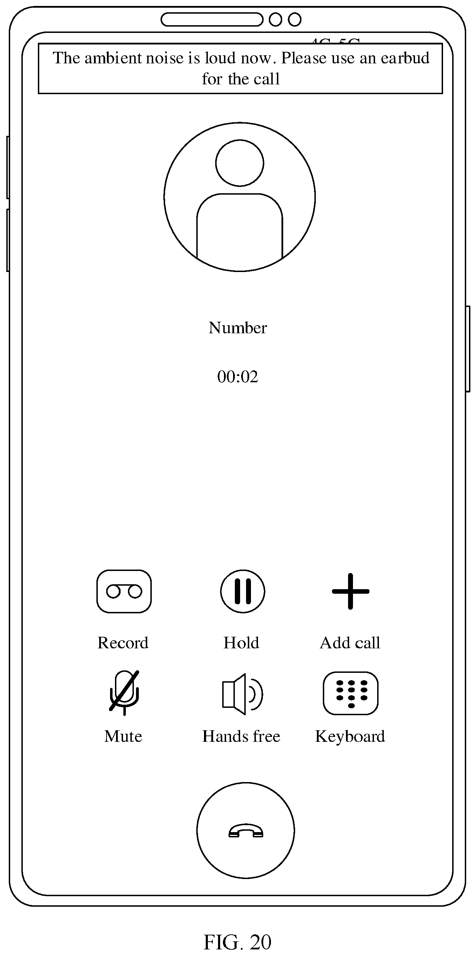

For example, the terminal device may prompt, based on a detection result of ambient noise, a user that an earbud can be used for a call. For example, after starting a call, the terminal device determines to establish a connection to an earbud, and the earbud assists in the call. The terminal device may obtain ambient noise, for example, obtain current ambient noise by using a noise detection application. If intensity of the ambient noise is greater than a preset threshold, the terminal device determines that the current ambient noise is large, and prompts the user that an earbud can be used for the call. For example, as shown in FIG. 19, on a call screen, prompt information such as "ambient noise is large now, try using an earbud for the call" is displayed. Alternatively, as shown in FIG. 20, a banner prompt may be displayed. This is not limited in this application.

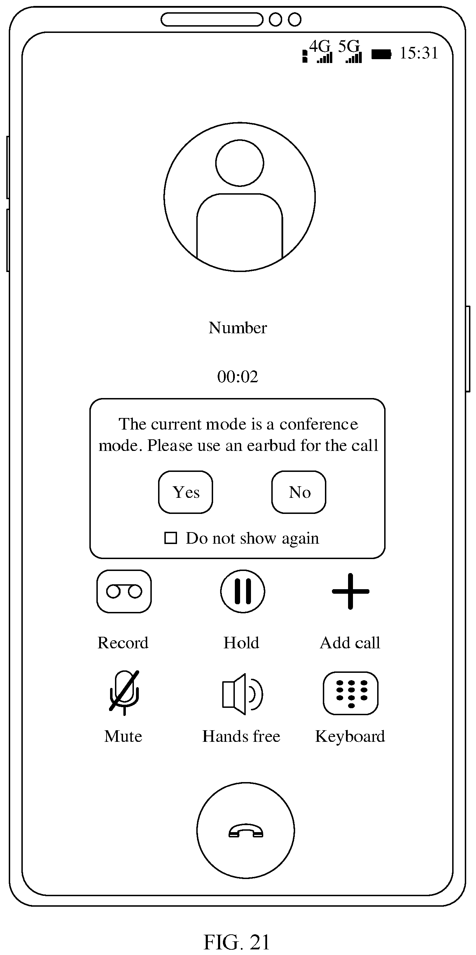

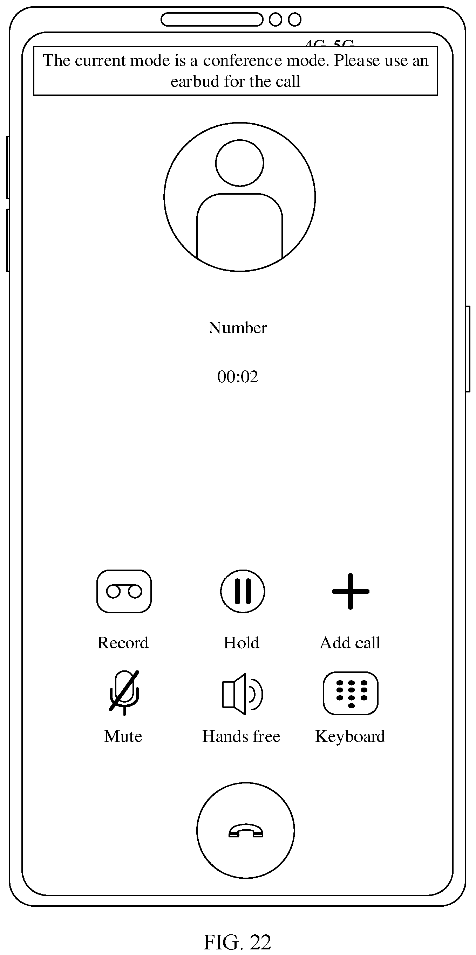

In an implementation, a terminal device may also determine, based on a currently set scene mode, whether to prompt a user that an earbud can be used for a call. For example, scene mode setting software is installed on the terminal device, and based on the software, the user may set a conference mode, a sleep mode, and the like. After starting a call, the terminal device determines that the call can be assisted by an earbud and that the terminal device is currently in the conference mode (or the sleep mode), the terminal device may prompt the user that an earbud can be used for the call. For example, as shown in FIG. 21, on a call screen, prompt information such as "Conference mode is set now, try using an earbud for the call" is displayed. Alternatively, as shown in FIG. 22, a banner prompt may be displayed. This is not limited in this application.

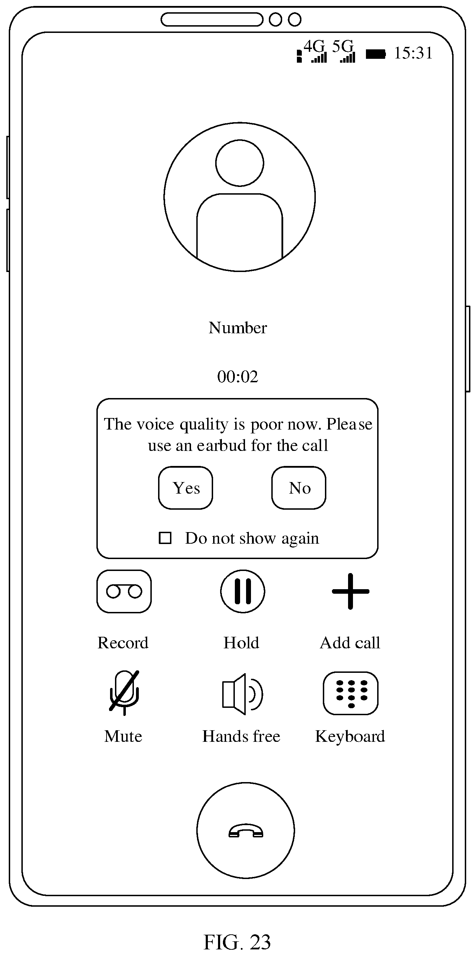

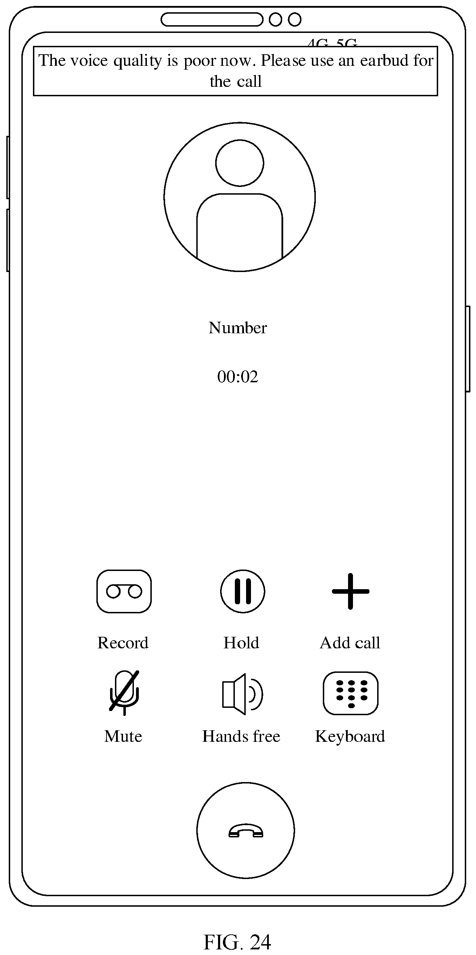

In an implementation, a terminal device may also determine, based on a voice signal sent by a headset, whether to prompt a user that an earbud can be used for a call. For example, after starting a call, the terminal device receives the voice signal sent by the headset. If the terminal device detects that a signal-to-noise ratio of the voice signal is less than a preset prompt threshold, the terminal device may prompt the user that an earbud can be used for the call. For example, as shown in FIG. 23, on a call screen, prompt information such as "Voice quality is poor now, try using an earbud for the call" is displayed. Alternatively, as shown in FIG. 24, a banner prompt may be displayed. This is not limited in this embodiment of this application.

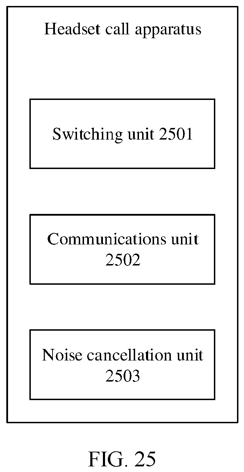

Corresponding to the headset call method in the foregoing embodiments, FIG. 25 is a block diagram of a structure of a headset call apparatus according to an embodiment of this application. For ease of description, only parts related to this embodiment of this application are shown.

The headset call apparatus is applied to a headset, for example, may be a chip or a processor on the headset, and a microphone is disposed on a first earbud in a left earbud and a right earbud of the headset. As shown in FIG. 25, the headset call apparatus includes:
a switching unit 2501, configured to: if detecting that the first earbud is in a non-wearing state when the headset is in a call state, determine the microphone on the first earbud as a talking microphone; and
a communications unit 2502, configured to send a first voice signal received by the talking microphone to a terminal device.

In an implementation, the switching unit 2501 is further configured to turn off a speaker on the first earbud when determining the microphone on the first earbud as the talking microphone.

In an implementation, the switching unit 2501 is specifically configured to determine the microphone on the first earbud as the talking microphone if detecting that the first earbud is in the non-wearing state and a signal-to-noise ratio of a voice signal received by the microphone on the first earbud is greater than a signal-to-noise ratio of a voice signal received by a current talking microphone on the headset.

In an implementation, a wearing sensor is disposed on the first earbud, and the switching unit 2501 is further configured to determine whether the first earbud is in the non-wearing state based on detection information of the wearing sensor.

In an implementation, a switch is disposed on the first earbud, and the switching unit 2501 is specifically configured to determine that the first earbud is in the non-wearing state when detecting the switch is on.

In an implementation, the microphone on the first earbud includes a front-facing microphone and a rear-facing microphone, and the switching unit 2501 is specifically configured to determine that the first earbud is in the non-wearing state when detecting that an absolute value of a difference between a signal-to-noise ratio of a voice signal received by the front-facing microphone and a signal-to-noise ratio of a voice signal received by the rear-facing microphone is less than a preset difference.

In an implementation, the microphone on the first earbud includes a first microphone and a second microphone, and the switching unit 2501 is specifically configured to: when detecting that the first microphone is blocked, determine that the first earbud is in the non-wearing state, and determine the second microphone as the talking microphone.

In an implementation, if a plurality of microphones are disposed on the first earbud, the switching unit 2501 is specifically configured to determine a microphone with a maximum signal-to-noise ratio in the plurality of microphones as the talking microphone.

In an implementation, if a plurality of microphones are disposed on the first earbud, the switching unit 2501 is specifically configured to determine at least two microphones of the plurality of microphones as talking microphones.

The communications unit 2502 is specifically configured to: synthesize voice signals separately received by the at least two talking microphones to obtain the first voice signal, and send the first voice signal to the terminal device.

In an implementation, the headset call apparatus further includes a noise cancellation unit 2503. The noise cancellation unit 2503 is configured to perform, by using a voice signal received by at least one microphone other than the talking microphone on the headset, noise cancellation on the first voice signal received by the talking microphone.

The communications unit 2502 is specifically configured to send the first voice signal after noise cancellation to the terminal device.

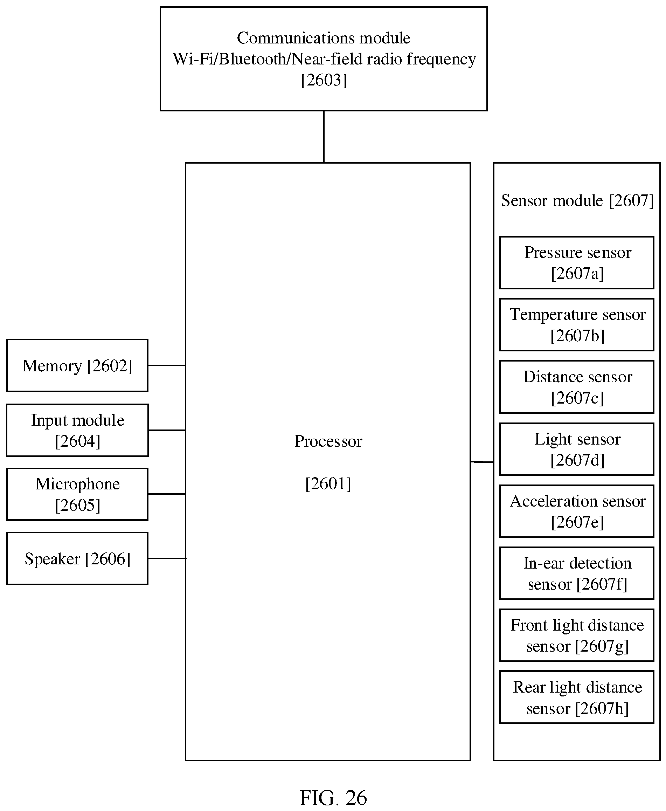

FIG. 26 is a schematic diagram of a hardware structure of a headset according to this application. The headset provided in this embodiment of this application may be a headset with a plurality of microphones, and a microphone is disposed on at least one of a left earbud and a right earbud of the headset. The headset provided in this embodiment of this application may be a headset of any form, such as a TWS headset, a neckband headset, or a wire control headset. This is not limited in this application.

As shown in FIG. 26, the headset includes components such as a processor 2601, a memory 2602, a communications module 2603, an input module 2604, a microphone 2605, a speaker 2606, and a sensor module 2607. It may be understood that a structure of the headset shown in FIG. 26 does not constitute a limitation on the headset. The headset may include more or fewer components than those shown in the figure, or may include a combination of some components, or may include different component arrangements.

It may be understood that, if the headset is a TWS headset, a left earbud and a right earbud may respectively have one or more components of the processor 2601, the memory 2602, the communications module 2603, the input module 2604, the microphone 2605, the speaker 2606, and the sensor module 2607.

If the headset is a wire control headset or a neckband headset, a left earbud and a right earbud of the headset may respectively have one or more components of the sensor module 2607, the speaker 2606, the microphone 2605, and the input module 2604. A control module may specifically include modules such as the processor 2601, the memory 2602, the communications module 2603, the input module 2604, and the microphone 2605.

The processor 2601 may be at least one of the following types: a central processing unit (Central Processing Unit, CPU). The processor 2601 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, or a discrete hardware component. The general-purpose processor may be a microprocessor, or the processor may be any conventional processor or the like.

A memory may be further disposed in the processor 2601, and is configured to store instructions and data. In some embodiments, the memory in the processor 110 is a cache memory. The memory may store instructions or data just used or cyclically used by the processor 110. If the processor 2601 needs to use the instructions or the data again, the processor 2601 may directly invoke the instructions or the data from the memory, to avoid repeated access and reduce a waiting time of the processor 2601, so as to improve system efficiency.

The memory 2602 may be configured to store a software program and a module. The processor 2601 performs various function applications of the headset and data processing by running the software program and the module that are stored in the memory 2602. The memory 2602 may mainly include a program storage area and a data storage area. The program storage area may store an operating system, an application program required by at least one function, and the like. The data storage area may store data created based on use of the headset, and the like. In addition, the memory 2602 may include a high-speed random access memory, or may include a nonvolatile memory such as at least one magnetic disk storage device, a flash memory, or another volatile solid-state storage device.

The communications module 2603 is configured to implement signal receiving and sending under control of the processor 2601, for example, receive a voice signal of another party in the call sent by the terminal device, and send a voice signal to the terminal device. The communications module 2603 may include a radio frequency (Radio Frequency, RF) circuit. Usually, the RF circuit includes but is not limited to an antenna, at least one amplifier, a transceiver, a coupler, an LNA (low noise amplifier, low noise amplifier), a duplexer, and the like. In addition, a near field RF circuit may further communicate with a network and another device through wireless communication. The wireless communication may use any communications standard or protocol, including but not limited to a short-range communications technology, for example, wireless fidelity (wireless fidelity, Wi-Fi) communication, Bluetooth communication, and near field radio frequency communication.

The input module 2604 may be configured to receive input button information and switch information, and generate button signal input and voice signal input related to user setting and function control of the headset. Specifically, the input module 2604 may include a touch button 2604a and/or a physical button 2604b. The touch button 2604a may collect a touch operation of the user on or near the touch button 2604a (such as an operation of the user on or near the touch button 2604a by using any suitable object or accessory such as a finger or a stylus), and drive a corresponding connection apparatus according to a preset program. In an implementation, the touch panel 2604a may include two parts: a touch detection apparatus and a touch controller. In addition, the touch button 2604a may be implemented in a plurality of types, such as a resistive type, a capacitive type, an infrared type, and a surface acoustic wave type. The physical button 2604 may include one or more of a volume control button, an on/off button, and the like.

The microphone 2605, also referred to as a "mike" or a "mic", is configured to convert a sound signal into an electrical signal. When making a call or sending a voice message, a user may make a sound near the microphone 2605 through the mouth of the user, to input a sound signal to the microphone 2605. A plurality of microphones 2605 may be disposed on the headset.

The speaker 2606, also referred to as a "loudspeaker", is configured to convert an audio electrical signal into a sound signal.

The sensor module 2607 may include a pressure sensor 2607a, a temperature sensor 2607b, a distance sensor 2607c, a light sensor 2607d, an acceleration sensor 2607e, an in-ear detection sensor 2607f, a front light distance sensor 2607g, a rear light distance sensor 2607h, or the like.

The pressure sensor 2607a is configured to sense a pressure signal, and can convert the pressure signal into an electrical signal. In some embodiments, the pressure sensor 2607a may be disposed on the display 2605. There are a plurality of types of pressure sensors 2607a, such as a resistive pressure sensor, an inductive pressure sensor, and a capacitive pressure sensor. The capacitive pressure sensor may include at least two parallel plates made of conductive materials. When a force is applied to the pressure sensor 2607a, capacitance between electrodes changes. The headset determines pressure intensity based on the change in the capacitance. In some embodiments, the pressure sensor 2607a may detect a switch operation, or may detect whether an earbud is in a non-wearing state.

The acceleration sensor 2607e may detect magnitude of accelerations of the headset in various directions (usually on three axes). When the headset is still, a value and a direction of gravity may be detected. The acceleration sensor 2607e may be further configured to identify a state of the headset, and is used for wearing detection.

The distance sensor 2607c is configured to measure a distance. The headset may measure a distance through infrared light or a laser. In some embodiments, the headset may perform ranging by using the distance sensor 2607c to implement wearing detection.

The light sensor 2607d is configured to measure light intensity. In some embodiments, the headset may measure light intensity by using the light sensor 2607d, to implement wearing detection.

The temperature sensor 2607b is configured to detect a temperature. In some embodiments, the headset detects a temperature by using the temperature sensor 2607b, to implement wearing detection.

The front light distance sensor 2607g and the rear light distance sensor 2607h are configured to detect light distances in front of and behind the headset. In some embodiments, the headset may perform ranging by using the front light distance sensor 2607g and the rear light distance sensor 2607h, to implement wearing detection.

In addition, although not shown, the headset may further include a power supply module and the like, and details are not described herein.

An embodiment of this application further provides a computer-readable storage medium. All or some of the methods described in the foregoing embodiments may be implemented by using software, hardware, firmware, or any combination thereof. If the methods are implemented in the software, functions may be used as one or more instructions or code and stored in the computer-readable medium or transmitted on the computer-readable medium. The computer-readable medium may include a computer storage medium and a communications medium, and may further include any medium that can transfer a computer program from one place to another. The storage medium may be any available medium accessible to a computer.

In an implementation design, the computer-readable medium may include a read-only memory (read-only memory, ROM) or another type of static storage device that can store static information and instructions, a random access memory (random access memory, RAM) or another type of dynamic storage device that can store information and instructions, or may be an electrically erasable programmable read-only memory (Electrically erasable programmable-only memory, EEPROM) or another optical disk memory, a magnetic disk memory or another magnetic storage device, or any other medium that may be used to carry, or stores required program code in a form of an instruction or a data structure, and may be accessed by a computer. In addition, any connection is appropriately referred to as a computer-readable medium. For example, if software is transmitted from a website, a server, or another remote source by using a coaxial cable, an optical fiber cable, a twisted pair, a digital subscriber line (DSL), or a wireless technology (such as infrared, radio, and microwave), the coaxial cable, optical fiber cable, twisted pair, DSL, or wireless technology such as infrared, radio, and microwave, is included in the definition of the medium. For example, a magnetic disc and an optical disc used in this specification include a compact disc (CD), a laser disc, an optical disc, a digital versatile disc (DVD), a floppy disk, and a Blu-ray disc. The magnetic disc usually reproduces data in a magnetic manner, and the optical disc reproduces data optically by using a laser. The foregoing combination should also be included in the scope of the computer-readable medium.

An embodiment of this application further provides a computer program product. All or some of the methods described in the foregoing embodiments may be implemented by using software, hardware, firmware, or any combination thereof. If the methods are implemented in the software, all or some of the methods may be implemented in a form of the computer program product. The computer program product includes one or more computer instructions. When the foregoing computer program instructions are loaded and executed on a computer, all or some of the procedures or functions described according to the foregoing method embodiments are generated. The computer may be a general-purpose computer, a special-purpose computer, a computer network, a network device, user equipment, or another programmable apparatus.

A person skilled in the art may clearly understand that, for the purpose of convenient and brief description, division into the foregoing function units or modules is merely used as an example for illustration. During actual application, the foregoing functions may be allocated to different function units or modules for implementation based on a requirement, that is, an inner structure of an apparatus is divided into different function units or modules to implement all or some of the functions described above. Function units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the function units and modules are merely for ease of distinguishing between the function units and modules, but are not intended to limit the protection scope of this application. For a specific working process of the units or modules in the foregoing system, refer to a corresponding process in the foregoing method embodiments. Details are not described herein again.

In the foregoing embodiments, the description of each embodiment has respective focuses. For a part that is not described in detail or recorded in an embodiment, refer to related descriptions in other embodiments.

The foregoing embodiments are merely intended to describe the technical solutions of this application, but are not to limit this application. Although this application is described in detail with reference to the foregoing embodiments, a person of ordinary skill in the art should understand that they may still make modifications to the technical solutions described in the foregoing embodiments or make equivalent replacements to some technical features thereof. Such modifications and replacements may fall within the scope of protection, which is defined by the claims.

## Claims

1. A headset call method, applied to a headset, wherein the headset comprises a left earbud and a right earbud, and the method comprises:
in a call state, determining (S301) a microphone on a first earbud as a talking microphone in response to detecting that the first earbud is in a non-wearing state; and
sending (S302) a first voice signal received by the talking microphone to a terminal device, wherein
the first earbud is one of the left earbud and the right earbud,
**characterised in that** determining (S301) a microphone on a first earbud as a talking microphone in response to detecting that the first earbud is in a non-wearing state comprises:
determining the microphone on the first earbud as the talking microphone in response to
detecting that the first earbud is in the non-wearing state and a signal-to-noise ratio of a voice signal received by the microphone on the first earbud is greater than a signal-to-noise ratio of a voice signal received by a current talking microphone on the headset.

2. The method according to claim 1, wherein the method further comprises: turning off a speaker on the first earbud when determining the microphone on the first earbud as the talking microphone.

3. The method according to claim 1 or 2, wherein a wearing sensor is disposed on the first earbud, and the method further comprises:
determining whether the first earbud is in the non-wearing state based on detection information of the wearing sensor.

4. The method according to claim 1 or 2, wherein a switch is disposed on the first earbud, and when it is detected that the switch is on, it is determined that the first earbud is in the non-wearing state.

5. The method according to claim 1 or 2, wherein the microphone on the first earbud comprises a front-facing microphone and a rear-facing microphone, and when it is detected that an absolute value of a difference between a signal-to-noise ratio of a voice signal received by the front-facing microphone and a signal-to-noise ratio of a voice signal received by the rear-facing microphone is less than a preset difference, it is determined that the first earbud is in the non-wearing state.

6. The method according to claim 1 or 2, wherein the microphone on the first earbud comprises a first microphone and a second microphone, and when it is detected that the first microphone is blocked, it is determined that the first earbud is in the non-wearing state; and
the determining a microphone on a first earbud as a talking microphone comprises:
determining the second microphone as the talking microphone.

7. The method according to any one of claims 1 to 6, wherein if a plurality of microphones are disposed on the first earbud, the determining a microphone on a first earbud as a talking microphone comprises:
determining a microphone with a maximum signal-to-noise ratio in the plurality of microphones as the talking microphone.

8. The method according to any one of claims 1 to 6, wherein if a plurality of microphones are disposed on the first earbud, the determining a microphone on a first earbud as a talking microphone comprises:
determining at least two microphones of the plurality of microphones as talking microphones; and
the sending a first voice signal received by the talking microphone to a terminal device comprises:
synthesizing voice signals separately received by the at least two talking microphones to obtain the first voice signal; and
sending the first voice signal to the terminal device.

9. The method according to any one of claims 1 to 8, wherein before the sending a first voice signal received by the talking microphone to a terminal device, the method further comprises:
performing, by using a voice signal received by at least one microphone other than the talking microphone on the headset, noise cancellation on the first voice signal received by the talking microphone; and
the sending a first voice signal received by the talking microphone to a terminal device comprises:
sending the first voice signal after noise cancellation to the terminal device.

10. A headset, wherein the headset comprises a left earbud and a right earbud, the left earbud and the right earbud comprise a processor, a memory, and a computer program that is stored in the memory and that can run on the processor, wherein at least one of the left earbud and the right earbud comprises a first microphone, and the headset further comprises a second microphone, and wherein when the processor executes the computer program, the headset is enabled to perform the headset call method according to any one of claims 1 to 9.

11. The headset according to claim 10, wherein the headset is a true wireless stereo headset or a neckband headset.

12. The headset according to claim 10 or 11, wherein a first earbud is a primary earbud.

13. The headset according to any one of claims 10 to 12, wherein a first voice signal is a voice signal of a user received by a talking microphone.

14. A computer-readable storage medium, storing a computer program, which, when being executed by a headset comprising a left earbud and a right earbud, wherein at least one of the left earbud and the right earbud comprises a first microphone, and the headset further comprises a second microphone, enables the headset to implement the headset call method according to any one of claims 1 - 9.

15. A computer program product, which, when being run on a headset comprising a left earbud and a right earbud, wherein at least one of the left earbud and the right earbud comprises a first microphone, and the headset further comprises a second microphone, enables the headset to implement the headset call method according to any one of claims 1 - 9.

## Patentansprüche

1. Headset-Anrufverfahren, das auf ein Headset angewendet wird, wobei das Headset einen linken Ohrhörer und einen rechten Ohrhörer umfasst, und das Verfahren umfasst:
in einem Anrufzustand, Bestimmen (S301) eines Mikrofons an einem ersten Ohrhörer als ein Sprechmikrofon als Reaktion auf ein Erkennen, dass sich der erste Ohrhörer in einem nicht getragenen Zustand befindet; und
Senden (S302) eines von dem Sprechmikrofon empfangenen ersten Sprachsignals an ein Endgerät, wobei der erste Ohrhörer einer von dem linken Ohrhörer und dem rechten Ohrhörer ist,
**dadurch gekennzeichnet, dass** das Bestimmen (S301) eines Mikrofons an einem ersten Ohrhörer als ein Sprechmikrofon als Reaktion auf das Erkennen, dass sich der erste Ohrhörer in einem nicht getragenen Zustand befindet, umfasst:
Bestimmen des Mikrofons an dem ersten Ohrhörer als das Sprechmikrofon als Reaktion auf das Erkennen, dass sich der erste Ohrhörer in dem nicht getragenen Zustand befindet und ein Signal-Rausch-Verhältnis eines von dem Mikrofon an dem ersten Ohrhörer empfangenen Sprachsignals größer als ein Signal-Rausch-Verhältnis eines von dem aktuellen Sprechmikrofon an dem Headset empfangenen Sprachsignals ist.

2. Verfahren nach Anspruch 1, wobei das Verfahren ferner umfasst: Ausschalten eines Lautsprechers an dem ersten Ohrhörer, wenn das Mikrofon an dem ersten Ohrhörer als das Sprechmikrofon bestimmt wird.

3. Verfahren nach Anspruch 1 oder 2, wobei ein Tragesensor an dem ersten Ohrhörer angeordnet ist, und das Verfahren ferner umfasst:
Bestimmen, ob sich der erste Ohrhörer in dem nicht getragenen Zustand befindet, basierend auf Erkennungsinformationen des Tragesensors.

4. Verfahren nach Anspruch 1 oder 2, wobei ein Schalter an dem ersten Ohrhörer angeordnet ist, und wenn erkannt wird, dass der Schalter eingeschaltet ist, bestimmt wird, dass sich der erste Ohrhörer in dem nicht getragenen Zustand befindet.

5. Verfahren nach Anspruch 1 oder 2, wobei das Mikrofon an dem ersten Ohrhörer ein nach vorne gerichtetes Mikrofon und ein nach hinten gerichtetes Mikrofon umfasst, und wenn erkannt wird, dass ein Absolutwert einer Differenz zwischen einem Signal-Rausch-Verhältnis eines von dem nach vorne gerichteten Mikrofon empfangenen Sprachsignals und einem Signal-Rausch-Verhältnis eines von dem nach hinten gerichteten Mikrofon empfangenen Sprachsignals kleiner als eine voreingestellte Differenz ist, bestimmt wird, dass sich der erste Ohrhörer in dem nicht getragenen Zustand befindet.

6. Verfahren nach Anspruch 1 oder 2, wobei das Mikrofon an dem ersten Ohrhörer ein erstes Mikrofon und ein zweites Mikrofon umfasst, und wenn erkannt wird, dass das erste Mikrofon blockiert ist, bestimmt wird, dass sich der erste Ohrhörer in dem nicht getragenen Zustand befindet; und
das Bestimmen eines Mikrofons an einem ersten Ohrhörer als ein Sprechmikrofon umfasst:
Bestimmen des zweiten Mikrofons als das Sprechmikrofon.

7. Verfahren nach einem der Ansprüche 1 bis 6, wobei, falls eine Vielzahl von Mikrofonen an dem ersten Ohrhörer angeordnet sind, das Bestimmen eines Mikrofons an einem ersten Ohrhörer als ein Sprechmikrofon umfasst:
Bestimmen eines Mikrofons mit einem maximalen Signal-Rausch-Verhältnis aus der Vielzahl von Mikrofonen als das Sprechmikrofon.

8. Verfahren nach einem der Ansprüche 1 bis 6, wobei, falls eine Vielzahl von Mikrofonen an dem ersten Ohrhörer angeordnet sind, das Bestimmen eines Mikrofons an einem ersten Ohrhörer als ein Sprechmikrofon umfasst:
Bestimmen von mindestens zwei Mikrofonen der Vielzahl von Mikrofonen als Sprechmikrofone; und
das Senden eines von dem Sprechmikrofon empfangenen ersten Sprachsignals an ein Endgerät umfasst:
Synthetisieren von Sprachsignalen, die separat von den mindestens zwei Sprechmikrofonen empfangen werden, um das erste Sprachsignal zu erhalten; und
Senden des ersten Sprachsignals an das Endgerät.

9. Verfahren nach einem der Ansprüche 1 bis 8, wobei vor dem Senden eines von dem Sprechmikrofon empfangenen ersten Sprachsignals an ein Endgerät das Verfahren ferner umfasst:
Durchführen, unter Verwendung eines von mindestens einem anderen Mikrofon als dem Sprechmikrofon an dem Headset empfangenen Sprachsignals, einer Rauschunterdrückung für das von dem Sprechmikrofon empfangene erste Sprachsignal; und
das Senden eines von dem Sprechmikrofon empfangenen ersten Sprachsignals an ein Endgerät umfasst:
Senden des ersten Sprachsignals nach der Rauschunterdrückung an das Endgerät.

10. Headset, wobei das Headset einen linken Ohrhörer und einen rechten Ohrhörer umfasst, wobei der linke Ohrhörer und der rechte Ohrhörer einen Prozessor, einen Speicher und ein Computerprogramm umfassen, das in dem Speicher gespeichert ist und das auf dem Prozessor ablaufen kann,
wobei mindestens einer des linken Ohrhörers und des rechten Ohrhörers ein erstes Mikrofon umfasst, und das Headset ferner ein zweites Mikrofon umfasst, und
wobei, wenn der Prozessor das Computerprogramm ausführt, das Headset aktiviert wird, um das Headset-Anrufverfahren nach einem der Ansprüche 1 bis 9 durchzuführen.

11. Headset nach Anspruch 10, wobei das Headset ein echtes kabelloses Stereo-Headset oder ein Nackenbügel-Headset ist.

12. Headset nach Anspruch 10 oder 11, wobei ein erster Ohrhörer ein primärer Ohrhörer ist.

13. Headset nach einem der Ansprüche 10 bis 12, wobei ein erstes Sprachsignal ein von einem Sprechmikrofon empfangenes Sprachsignal eines Benutzers ist.

14. Computerlesbares Speicherungsmedium, auf dem ein Computerprogramm gespeichert ist, das, wenn es von einem Headset, das einen linken Ohrhörer und einen rechten Ohrhörer umfasst, ausgeführt wird,
wobei mindestens einer des linken Ohrhörers und des rechten Ohrhörers ein erstes Mikrofon umfasst, und das Headset ferner ein zweites Mikrofon umfasst, das Headset aktiviert, um das Headset-Anrufverfahren nach einem der Ansprüche 1 bis 9 zu implementieren.

15. Computerprogrammprodukt, das, wenn es auf einem Headset, das einen linken Ohrhörer und einen rechten Ohrhörer umfasst, ausgeführt wird,
wobei mindestens einer des linken Ohrhörers und des rechten Ohrhörers ein erstes Mikrofon umfasst, und das Headset ferner ein zweites Mikrofon umfasst, das Headset aktiviert, um das Headset-Anrufverfahren nach einem der Ansprüche 1 bis 9 zu implementieren.

## Revendications

1. Procédé d'appel par casque d'écoute, appliqué à un casque d'écoute, dans lequel le casque d'écoute comprend un écouteur gauche et un écouteur droit, et le procédé comprend :
dans un état d'appel, la détermination (S301) d'un microphone sur un premier écouteur comme microphone de conversation en réponse à la détection du fait que le premier écouteur est dans un état non porté ; et
l'envoi (S302) d'un premier signal vocal reçu par le microphone de conversation à un dispositif terminal, dans lequel le premier écouteur est l'un parmi l'écouteur gauche et l'écouteur droit,
**caractérisé en ce que** la détermination (S301) d'un microphone sur un premier écouteur en tant que microphone de conversation en réponse à la détection du fait que le premier écouteur est dans un état non porté comprend :
la détermination du microphone sur le premier écouteur comme microphone de conversation en réponse à la détection du fait que le premier écouteur est dans l'état non porté et qu'un rapport signal/bruit d'un signal vocal reçu par le microphone sur le premier écouteur est supérieur à un rapport signal/bruit d'un signal vocal reçu par un microphone de conversation actuel sur le casque d'écoute.

2. Procédé selon la revendication 1, dans lequel le procédé comprend en outre : la désactivation d'un haut-parleur sur le premier écouteur lors de la détermination du microphone sur le premier écouteur comme microphone de conversation.

3. Procédé selon la revendication 1 ou 2, dans lequel un capteur de port est disposé sur le premier écouteur, et le procédé comprend en outre :
le fait de déterminer si le premier écouteur est dans l'état non porté sur la base d'informations de détection du capteur de port.

4. Procédé selon la revendication 1 ou 2, dans lequel un interrupteur est placé sur le premier écouteur, et lorsqu'il est détecté que l'interrupteur est activé, il est déterminé que le premier écouteur est dans l'état non porté.

5. Procédé selon la revendication 1 ou 2, dans lequel le microphone sur le premier écouteur comprend un microphone orienté vers l'avant et un microphone orienté vers l'arrière, et lorsqu'il est détecté qu'une valeur absolue d'une différence entre un rapport signal/bruit d'un signal vocal reçu par le microphone orienté vers l'avant et un rapport signal/bruit d'un signal vocal reçu par le microphone orienté vers l'arrière est inférieure à une différence prédéfinie, il est déterminé que le premier écouteur est dans l'état non porté.

6. Procédé selon la revendication 1 ou 2, dans lequel le microphone sur le premier écouteur comprend un premier microphone et un second microphone, et lorsqu'il est détecté que le premier microphone est bloqué, il est déterminé que le premier écouteur est dans l'état non porté ; et
la détermination d'un microphone sur un premier écouteur comme microphone de conversation comprend :
la détermination du second microphone comme microphone de conversation.

7. Procédé selon l'une quelconque des revendications 1 à 6, dans lequel, si une pluralité de microphones sont disposés sur le premier écouteur, la détermination d'un microphone sur un premier écouteur comme microphone de conversation comprend : la détermination d'un microphone avec un rapport signal/bruit maximal dans la pluralité de microphones comme microphone de conversation.

8. Procédé selon l'une quelconque des revendications 1 à 6, dans lequel, si une pluralité de microphones sont disposés sur le premier écouteur, la détermination d'un microphone sur un premier écouteur comme microphone de conversation comprend :
la détermination d'au moins deux microphones de la pluralité de microphones comme des microphones de conversation ; et
l'envoi d'un premier signal vocal reçu par le microphone de conversation à un dispositif terminal comprend :
la synthétisation de signaux vocaux reçus séparément par les au moins deux microphones de conversation pour obtenir le premier signal vocal ; et
l'envoi du premier signal vocal au dispositif terminal.

9. Procédé selon l'une quelconque des revendications 1 à 8, dans lequel, avant l'envoi d'un premier signal vocal reçu par le microphone de conversation à un dispositif terminal, le procédé comprend en outre :
la réalisation, à l'aide d'un signal vocal reçu par au moins un microphone autre que le microphone de conversation sur le casque d'écoute, d'une élimination du bruit sur le premier signal vocal reçu par le microphone de conversation ; et
l'envoi d'un premier signal vocal reçu par le microphone de conversation à un dispositif terminal comprend :
l'envoi du premier signal vocal après l'élimination du bruit au dispositif terminal.

10. Casque d'écoute, dans lequel le casque d'écoute comprend un écouteur gauche et un écouteur droit, l'écouteur gauche et l'écouteur droit comprennent un processeur, une mémoire et un programme informatique qui est stocké dans la mémoire et qui peut être exécuté sur le processeur,
dans lequel au moins l'un parmi l'écouteur gauche et l'écouteur droit comprend un premier microphone, et le casque d'écoute comprend en outre un second microphone, et
dans lequel lorsque le processeur exécute le programme informatique, le casque d'écoute est activé pour réaliser le procédé d'appel par casque d'écoute selon l'une quelconque des revendications 1 à 9.

11. Casque d'écoute selon la revendication 10, dans lequel le casque d'écoute est un véritable casque d'écoute stéréo sans fil ou un casque d'écoute tour de cou.

12. Casque d'écoute selon la revendication 10 ou 11, dans lequel un premier écouteur est un écouteur primaire.

13. Casque d'écoute selon l'une quelconque des revendications 10 à 12, dans lequel un premier signal vocal est un signal vocal d'un utilisateur reçu par un microphone de conversation.

14. Support de stockage lisible par ordinateur, stockant un programme informatique qui, lorsqu'il est exécuté par un casque d'écoute comprenant un écouteur gauche et un écouteur droit,
dans lequel au moins l'un parmi l'écouteur gauche et l'écouteur droit comprend un premier microphone, et le casque d'écoute comprend en outre un second microphone, permet au casque d'écoute de mettre en œuvre le procédé d'appel par casque d'écoute selon l'une quelconque des revendications 1 à 9.

15. Produit-programme informatique qui, lorsqu'il est exécuté sur un casque d'écoute comprenant un écouteur gauche et un écouteur droit,
dans lequel au moins l'un parmi l'écouteur gauche et l'écouteur droit comprend un premier microphone, et le casque d'écoute comprend en outre un second microphone, permet au casque d'écoute de mettre en œuvre le procédé d'appel par casque d'écoute selon l'une quelconque des revendications 1 à 9.
